# EUROPEAN PATENT APPLICATION

(11) **EP 3 216 655 A1**
(43) Date of publication of application: **13.09.2017**
(21) Application number: 15857524.1
(22) Date of filing: 30.08.2015
(51) Int. Cl.: B60R 11/02, B60J 1/00, B60R 11/04, C03C 17/04

(54) **WINDSHIELD**

(30) Priority: 04.11.2014 JP 2014224346; 24.04.2015 JP 2015089887
(71) Applicant: Nippon Sheet Glass Company, Limited, Tokyo 108-6321 (JP)
(72) Inventor: NAKAGAWA, Masafumi, Tokyo 108-6321 (JP)
(74) Representative: Webster, Jeremy Mark
(86) International application number: PCT/JP2015/074554
(87) International publication number: WO 2016/072136

(57) **Abstract**

A windshield according to the present invention is a windshield on which an information acquisition device that emits and/or receives light to acquire information from an outside of a vehicle can be arranged, and the windshield includes a glass sheet in which at least a portion is curved and on which a mask layer that blocks a field of vision from the outside of the vehicle is laminated, at least one opening being formed in the mask layer, an attachment member in which at least a portion is fixed at a position corresponding to the mask layer on the glass sheet and to which the information acquisition device can be attached, and a path member having a recessed portion for forming a path through which the information acquisition device emits and/or receives light between the path member and the glass sheet when the attachment member is fixed to the mask layer. The information acquisition device is arranged on a surface on a vehicle interior side of the glass sheet so as to be capable of acquiring information through the opening. The attachment member includes a fixed portion in which at least a portion is fixed at a position corresponding to the mask layer. In the attachment member, at least a portion of the fixed portion that is arranged around the recessed portion of the path member is fixed to the mask layer via a light shielding member.

## Description

### Technical Field

The present invention relates to a windshield.

### Background Art

In recent years, safety performance of automobiles has dramatically improved. In order to avoid a collision with a preceding vehicle, for example, a safety system is proposed in which the distance to the preceding vehicle and the speed of the preceding vehicle are detected and a brake automatically engages in an abnormal approach to the preceding vehicle. In such a system, the distance to the preceding vehicle and the like are measured using a laser radar or a camera. In general, an information acquisition device such as a laser radar or a camera is arranged on the inner side of a windshield, and the measurements are performed by emitting infrared rays ahead.

In order to conceal such an information acquisition device from the outside, a mask layer is formed on the inner surface of a glass sheet by applying dark-colored ceramic, and the information acquisition device is arranged on the mask layer. Such a mask layer is formed at the peripheral edge of the glass sheet and near the center of the upper portion of the glass sheet. At this time, an opening is formed in the mask layer, and a laser beam emitted and received by the laser radar, infrared rays received by the camera, and the like are emitted and received through this opening. In general, such an information acquisition device is not directly fixed to the mask layer, but is fixed to the mask layer via an attachment member such as a bracket. That is, after the attachment member is fixed to the mask layer with an adhesive or the like, the information acquisition device is attached to this attachment member. Then, a cover is attached to the attachment member from a vehicle interior side, and thus the information acquisition device is arranged in a space closed by the glass sheet, the bracket, and the cover.

### Citation List

### Patent Literature

Patent Literature 1: JP 2006-327381A

### Summary of Invention

### Technical Problem

In the attachment member as mentioned above, the entirety of a portion that is in contact with the mask layer is not fixed to the mask layer using a fixing material such as an adhesive or a double-sided adhesive tape, but only a portion thereof is fixed thereto. This is because it is sufficient that the attachment member is fixed thereto to an extent that the attachment member does not come off of the mask layer. Therefore, there is a risk that light will enter the inner space surrounded by the attachment member from the outside through a portion in which the fixing material is not provided. In particular, since the windshield is curved, a gap is likely to be formed between the attachment member and the windshield, thus making it likely that light will enter. Such entry of light may affect the reception and emission of light by the information acquisition device, and there is a risk that this will cause measurement errors. In particular, a recessed portion for forming a path serving as a path of light between the opening in the mask layer and the attachment member is formed in the attachment member, and the entry of light from the outside near this recessed portion causes measurement errors. It should be noted that there is a case where such a recessed portion is formed not in the attachment member but in the information acquisition device, but in this case, a problem may arise in that light enters the recessed portion.

The present invention was made in order to solve the foregoing problems, and it is an object thereof to provide a windshield in which the information acquisition device is attached to the mask layer via the attachment member and light can be prevented from entering the inside of the attachment member from the outside.

### Solution to Problem

Specifically, invention 1 provides an invention with the following aspects.

### Invention 1

Aspect 1 is a windshield on which an information acquisition device that emits and/or receives light to acquire information from an outside of a vehicle can be arranged, the windshield including:
a glass sheet in which at least a portion is curved and on which a mask layer that blocks a field of vision from the outside of the vehicle is laminated, at least one opening being formed in the mask layer;
an attachment member in which at least a portion is fixed at a position corresponding to the mask layer on the glass sheet and to which the information acquisition device can be attached; and
a path member having a recessed portion for forming a path through which the information acquisition device emits and/or receives light between the path member and the glass sheet when the attachment member is fixed to the mask layer,
wherein the information acquisition device is arranged on a surface on a vehicle interior side of the glass sheet so as to be capable of acquiring information through the opening,
the attachment member includes a fixed portion in which at least a portion is fixed at a position corresponding to the mask layer, and
in the attachment member, at least a portion of the fixed portion that is arranged around the recessed portion of the path member is fixed to the mask layer via a light shielding member.

Aspect 2 is the windshield according to aspect 1, wherein the path member is integrally fixed to the attachment member.

Aspect 3 is the windshield according to aspect 1, wherein the path member is provided in the information acquisition device.

Aspect 4 is the windshield according to aspect 2,
wherein a first opening through which light that travels from the outside of the glass sheet toward the information acquisition device and that is received by the information acquisition device passes, and a second opening through which light that is emitted by the information acquisition device toward the glass sheet passes are formed in the attachment member,
the second opening is in communication with the recessed portion, and
a portion of the fixed portion is configured to separate the first opening and the second opening, and at least a portion of the fixed portion is fixed to the mask layer via the light shielding member.

Aspect 5 is the windshield according to aspect 4,
wherein the attachment member is formed in a rectangular frame shape having a first side, a second side, a third side, and a fourth side in a plan view and includes a pair of supporting portions that support the information acquisition device,
the first side is arranged on an upper side of the glass sheet and the third side is arranged on a lower side of the glass sheet,
the supporting portions are respectively arranged on the second side and the fourth side,
the first opening is arranged close to the first side,
the second opening is arranged close to the third side, and
the recessed portion is arranged along the third side and is in communication with the second opening.

Aspect 6 is the windshield according to aspect 5, wherein at least a portion of the fixed portion arranged on the first side is fixed to the mask layer via the light shielding member.

Aspect 7 is the windshield according to any one of claims 1 to 6,
wherein the fixed portion arranged around the recessed portion is provided with:
a lateral light shielding member that extends from one end portion to the other end portion in a lateral direction of the recessed portion; and
a pair of side light shielding members that are arranged on both sides of the lateral light shielding member.

Aspect 8 is the windshield according to any one of aspects 1 to 7, wherein the light shielding member is constituted by an adhesive or a double-sided adhesive tape.

Aspect 9 is the windshield according to aspect 8, wherein the light shielding member is an epoxy resin-based adhesive.

Aspect 10 is the windshield according to any one of aspects 1 to 7,
wherein the mask layer is configured such that the opening is not closed at a portion of a peripheral edge and is open to an outside, and
the fixed portion of the attachment member is fixed to the glass sheet at the open portion using the light shielding member constituted by a double-sided adhesive tape.

Aspect 11 is the windshield according to aspect 8 or 10, wherein the light shielding member is constituted by a double-sided adhesive tape, and the double-sided adhesive tape has a thickness of 0.2 to 0.8 mm.

Aspect 12 is the windshield according to any one of aspects 1 to 11, wherein the information acquisition device includes a camera, and the camera is configured to acquire information through the opening.

### Invention 2

In general, a rearview mirror is attached to the inner side of a windshield of an automobile in addition to the information acquisition device as mentioned above. This rearview mirror is attached at substantially the same position as the position of the information acquisition device, that is, attached to a base member that is provided at the center of the upper portion of the windshield and fixed to the mask layer.

Incidentally, the base member for the rearview mirror and the attachment member for the information acquisition device can be attached using various fixing materials such as an adhesive and a double-sided adhesive tape. However, the base member and the attachment member are attached at substantially the same position on the windshield, and therefore, using the different fixing materials causes a problem in that a manufacturing process becomes complex.

Invention 2 was made in order to solve this problem, and it is an object thereof to provide a windshield in which the base member for the rearview mirror and the attachment member for the information acquisition device are attached to the mask layer and that can be easily manufactured. Specifically, invention 2 provides an invention with the following aspects.

Aspect 1 is a windshield on which an information acquisition device that emits and/or receives light to acquire information from an outside of a vehicle can be arranged, the windshield including:
a glass sheet on which a mask layer that blocks a field of vision from the outside of the vehicle is laminated, at least one opening being formed in the mask layer;
an attachment member that is fixed to the mask layer on the glass sheet and to which the information acquisition device can be attached; and
a base member that is fixed to the mask layer and to which a rearview mirror can be attached,
wherein the attachment member and the base member are fixed to the mask layer using the same fixing material.

Aspect 2 is the windshield according to aspect 1, wherein the fixing material is an adhesive.

Aspect 3 is the windshield according to aspect 2, wherein the adhesive is an epoxy resin-based adhesive.

Aspect 4 is the windshield according to aspect 1, wherein the fixing material is a double-sided adhesive tape.

### Invention 3

When the information acquisition device is arranged on the mask layer as mentioned above, there is a risk that a problem as described below may arise. The windshield as mentioned above is manufactured by heating a glass sheet to which a mask region has been applied and molding it into a curved shape. At this time, the mask layer has a dark color such as black and thus absorbs a larger amount of heat in the glass sheet compared with the region in which the mask region is not formed such as the opening through which light passes. Therefore, the region in which the mask layer has been formed has large residual stress during molding, and distortion occurs in the vicinities of the boundary with the opening in the glass sheet. As a result, when a laser beam is emitted and received, there is a risk that light cannot be accurately emitted or received due to light being refracted by the distortion. Accordingly, there is also a risk that the distance between vehicles and the like are not accurately calculated.

Such a problem may arise not only in devices for measuring a distance between vehicles but also in information acquisition devices in general that acquire information from the outside of a vehicle by receiving light emitted by optical beacons, for example. Therefore, invention 3 was made in order to solve the foregoing problems, and it is an object thereof to provide a windshield to which the information acquisition device that emits and/or receives light through the opening in the mask region can be attached, and in which light can be accurately emitted or received and information can be accurately processed. Specifically, invention 3 provides an invention with the following aspects.

Aspect 1 is a windshield on which an information acquisition device that emits and/or receives light to acquire information from an outside of a vehicle can be arranged, the windshield including:
a windowpane on which a mask layer that blocks a field of vision from the outside of the vehicle is laminated, at least one opening being formed in the mask layer; and
an attachment member that is fixed to the mask layer on the windowpane and to which the information acquisition device can be attached,
wherein the windowpane and a mask material constituting the mask layer have different thermal expansion rates and are formed together through heating,
the information acquisition device is arranged on a surface on a vehicle interior side of the windowpane so as to be capable of acquiring information through the opening, and
the attachment member has a configuration to which the information acquisition device can be attached such that a passage path of the light emitted and/or received is spaced apart from a peripheral edge of the opening in the mask layer by at least 4 mm.

Aspect 2 is the windshield according to aspect 1, wherein the mask region is black.

### Invention 4

In general, the windshield to which the information acquisition device is to be attached is formed in a curved shape, and therefore, it is not easy to fix the attachment member thereto. That is, in general, the fixed surface of the attachment member is formed in a flat shape, and therefore, when an attempt is made to attach this attachment member to the curved windshield, there is a possibility that strength with which the attachment member is fixed to the windshield may be reduced or positional shift may occur. Invention 4 was made in order to solve such a problem, and it is an object thereof to provide a windshield to which the attachment member to which the information acquisition device is to be attached can be accurately and firmly fixed. Specifically, invention 4 provides an invention with the following aspects.

Aspect 1 is a windshield on which an information acquisition device that emits and/or receives light to acquire information from an outside of a vehicle can be arranged, the windshield including:
a windowpane in which at least a portion is curved and on which a mask layer that blocks a field of vision from the outside of the vehicle is laminated, at least one opening being formed in the mask layer; and
an attachment member that is fixed at a position corresponding to the mask layer on the windowpane and to which the information acquisition device can be attached,
wherein the information acquisition device is arranged on a surface on a vehicle interior side of the windowpane so as to be capable of acquiring information through the opening,
the attachment member includes a fixed portion in which at least a portion is fixed at a position corresponding to the mask layer, and a supporting portion that is coupled to the fixed portion and supports the information acquisition device, and
the fixed portion includes a first region that is located at a position corresponding to the supporting portion, and at least one second region for fixing the attachment member at the position corresponding to the mask layer.

Aspect 2 is the windshield according to aspect 1, wherein the second region has a lower rigidity than that of the first region.

Aspect 3 is the windshield according to aspect 2, wherein the second region has a smaller thickness than that of the first region.

Aspect 4 is the windshield according to aspect 2, wherein the second region has a smaller width than that of the first region.

Aspect 5 is the windshield according to aspect 2, wherein the second region is made of a material having a lower rigidity than the rigidity of a material of the first region.

### Invention 5

Various methods can be used to mold a glass sheet to be included in the windshield, and examples thereof include a method in which a glass sheet is curved by being pressed with a mold, and a method in which a glass sheet is curved under its own weight. In the latter method, a frame-shaped mold is used, and a glass sheet is placed on this mold such that only the peripheral edge of the glass sheet is supported, and then heated. Thus, inside the frame of the mold, the glass sheet curves downward under its own weight, and curved surfaces are molded.

However, in this method, distortion occurs at the boundary between the peripheral edge of the glass sheet that is supported by the mold and a region on the inner side with respect to the peripheral edge. Therefore, when the attachment member is attached to such a portion in which distortion occurs, there is a risk that the attachment accuracy is reduced or the attachment strength is reduced.

Invention 5 was made in order to solve such a problem, and it is an object thereof to provide a windshield that is curved under its own weight and to which the attachment member to which the information acquisition device is to be attached can be accurately and firmly fixed. Specifically, invention 5 provides an invention with the following aspects.

Aspect 1 is a windshield on which an information acquisition device that emits and/or receives light to acquire information from an outside of a vehicle can be arranged, the windshield including:
a windowpane on which a mask layer that blocks a field of vision from the outside of the vehicle is laminated, at least one opening being formed in the mask layer; and
an attachment member that is fixed at a position corresponding to the mask layer on the windowpane and to which the information acquisition device can be attached,
wherein the information acquisition device is arranged on a surface on a vehicle interior side of the windowpane so as to be capable of acquiring information through the opening,
the windowpane curves downward under its own weight by being heated in a state in which the windowpane is placed on a frame-shaped mold and a peripheral edge is supported,
the windowpane is curved so as to have a bent portion along the peripheral edge on an inner side with respect to the peripheral edge, and
the attachment member is attached to a position on an inner side with respect to the bent portion.

Aspect 2 is the windshield according to aspect 1 or 2, wherein the window glass sheet includes a first glass sheet, a second glass sheet that is arranged opposite to the first glass sheet, and an interlayer sandwiched between the two glass sheets.

### Advantageous Effects of the Invention

With invention 1, in a windshield in which an information acquisition device is attached to a mask layer via an attachment member, light can be prevented from entering the inside of the attachment member from the outside.

### Brief Description of Drawings

FIG. 1 is a cross-sectional view of an embodiment of a windshield according to the present invention.
FIG. 2 is a plan view of FIG. 1.
FIG. 3 is a cross-sectional view of a laminated glass.
FIGS. 4(a) and 4(b) are a front view and a cross-sectional view, respectively, showing a depth of bend of a curved laminated glass.
FIG. 5 is a graph showing a relationship between general frequency and sound transmission loss with respect to glass sheets having a curved shape and a glass sheet having a flat shape.
FIG. 6 is a schematic plan view showing thickness measurement positions on a laminated glass.
FIG. 7 is an example of an image that is used for measurement of an interlayer.
FIG. 8 is a plan view of a glass sheet.
FIG. 9 is an enlarged plan view of a center mask layer.
FIG. 10 is a cross-sectional view of FIG. 9.
FIG. 11 is a side view showing an example of a method of manufacturing a glass sheet.
FIG. 12 is a cross-sectional view of a measurement unit.
FIG. 13 is a plan view of a bracket.
FIG. 14 is a graph showing distortion of a glass sheet.
FIG. 15 is another example of a plan view of a glass sheet.
FIG. 16 is a plan view of a glass sheet to which a base member of a rearview mirror is attached.
FIG. 17 is a cross-sectional view of FIG. 15.
FIG. 18 is a cross-sectional view showing another example of a glass sheet to which a base member of a rearview mirror is attached.
FIG. 19 is a cross-sectional view showing another example of a glass sheet to which a bracket is attached.
FIG. 20 is a plan view showing another example of a bracket.
FIG. 21 is a side view showing another example of a method of manufacturing a glass sheet.
FIG. 22 is a plan view of a mold shown in FIG. 20.
FIG. 23 is a cross-sectional view of the mold shown in FIG. 21 on which a laminated glass is placed.
FIG. 24 is a plan view of another example of a mask layer.
FIGS. 25(a) and 25(b) are diagrams showing another example of a bracket as viewed from a vehicle exterior side and a vehicle interior side, respectively.
FIG. 26 is a diagram of another example of a sensor as viewed from a vehicle exterior side.

### Description of Embodiments

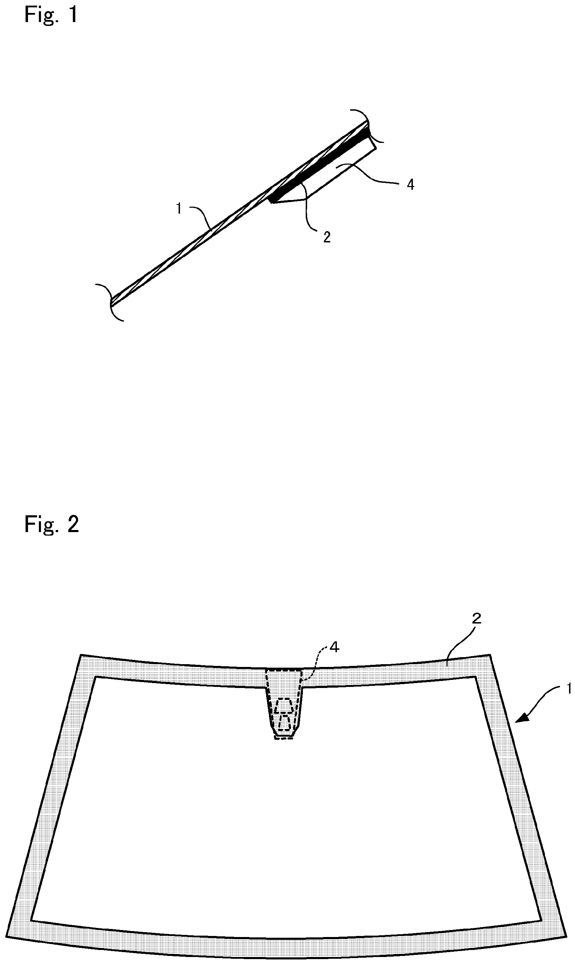

Hereinafter, an embodiment of a windshield according to the present invention will be described with reference to the drawings. In a windshield according to this embodiment, a measurement unit for measuring a distance between vehicles is attached to the vehicle interior side of a glass sheet. FIG. 1 is a cross-sectional view of the windshield according to this embodiment, and FIG. 2 is a plan view of FIG. 1. As shown in FIGS. 1 and 2, the windshield according to this embodiment includes a glass sheet 1, and a mask layer 2 that is laminated on the glass sheet 1, and a measurement unit 4 such as a laser radar that measures a distance between vehicles is attached to the mask layer 2. The individual members will be described below.

### 1. Overview of Glass Sheet

### 1-1. Glass sheet

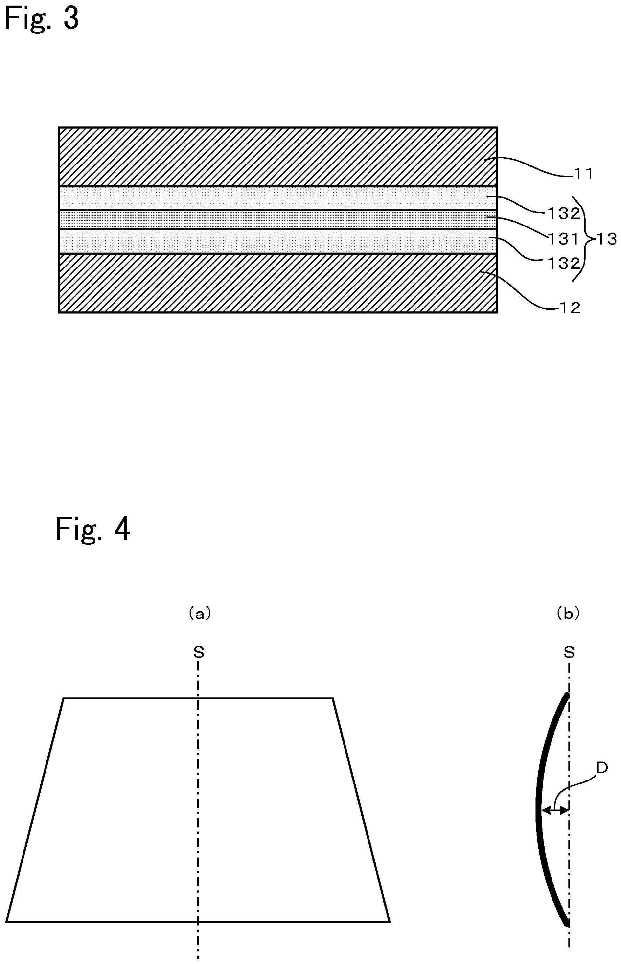

The glass sheet 1 can be variously configured, and can be constituted by a laminated glass including a plurality of glass sheets or by a single glass sheet, for example. In the case of using a laminated glass, the laminated glass can be configured as shown in FIG. 3, for example. FIG. 3 is a cross-sectional view of a laminated glass.

As shown in FIG. 3, this laminated glass includes an outer glass sheet 11 and an inner glass sheet 12, and a resin interlayer 13 is arranged between the glass sheets 11 and 12. First, the outer glass sheet 11 and the inner glass sheet 12 will be described. Known glass sheets can be used as the outer glass sheet 11 and the inner glass sheet 12, and these glass sheets can also be made of heat-ray absorbing glass, regular clear glass or green glass, or UV green glass. However, the glass sheets 11 and 12 are required to attain a visible light transmittance that conforms to the safety standards of a country in which the automobile is to be used. For example, an adjustment can be made so that the outer glass sheet 11 ensures a required solar absorptance and the inner glass sheet 12 provides a visible light transmittance that meets the safety standards. An example of the composition of clear glass, an example of the composition of heat-ray absorbing glass, and an example of the composition of soda-lime based glass are shown below.

### Clear glass

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R is an alkali metal)
Total iron oxide (T-Fe₂O₃) in terms of Fe₂O₃: 0.08 to 0.14 mass%

### Heat-ray absorbing glass

With regard to the composition of heat-ray absorbing glass, a composition obtained based on the composition of clear glass by setting the ratio of the total iron oxide (T-Fe₂O₃) in terms of Fe₂O₃ to 0.4 to 1.3 mass%, the ratio of CeO₂ to 0 to 2 mass%, and the ratio of TiO₂ to 0 to 0.5 mass% and reducing the components (mainly SiO₂ and Al₂O₃) forming the framework of glass by an amount corresponding to the increases in T-Fe₂O₃, CeO₂, and TiO₂ can be used, for example.

### Soda-lime based glass

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO+CaO: 5 to 15 mass%
Na₂O+K₂O: 10 to 20 mass%
SO₃: 0.05 to 0.3 mass%
B₂O₃: 0 to 5 mass%
Total iron oxide (T-Fe₂O₃) in terms of Fe₂O₃: 0.02 to 0.03 mass%

Although there is no particular limitation on the thickness of the laminated glass according to this embodiment, the total thickness of the outer glass sheet 11 and the inner glass sheet 12 is preferably set to 2.4 to 3.8 mm, more preferably 2.6 to 3.4 mm, and even more preferably 2.7 to 3.2 mm, from the viewpoint of weight reduction. As described above, there is a need to reduce the total thickness of the outer glass sheet 11 and the inner glass sheet 12 in order to reduce the weight. Therefore, although there is no particular limitation on the thicknesses of the glass sheets, the thicknesses of the outer glass sheet 11 and the inner glass sheet 12 can be determined as described below, for example.

The outer glass sheet 11 is mainly required to have durability and impact resistance against external interference. For example, when this laminated glass is used as a windshield of an automobile, the impact-resistance performance with respect to flying objects such as small stones is required. On the other hand, a larger thickness is not preferable because the weight increases. From this viewpoint, the thickness of the outer glass sheet 11 is preferably 1.8 to 2.3 mm, and more preferably 1.9 to 2.1 mm. The thickness to be used can be determined in accordance with the application of the glass sheet.

Although the thickness of the inner glass sheet 12 can be made equal to that of the outer glass sheet 11, the thickness of the inner glass sheet 12 can be made smaller than that of the outer glass sheet 11 in order to reduce the weight of the laminated glass, for example. Specifically, when the strength of the glass sheet is taken into consideration, the thickness is preferably 0.6 to 2.0 mm, more preferably 0.8 to 1.6 mm, and even more preferably 1.0 to 1.4 mm. Furthermore, the thickness is preferably 0.8 to 1.3 mm. With regard to the inner glass sheet 12 as well, the thickness to be used can be determined in accordance with the application of the glass sheet.

The outer glass sheet 11 and the inner glass sheet 12 according to this embodiment have a curved shape.

It is supposed that in the case of a glass sheet having a curved shape, the larger the depth of bend is, the lower the sound insulation performance is. "Depth of bend" is an amount indicating the bend of the glass sheet. For example, as shown in FIG. 4, when a straight line L connecting the center of an upper side and the center of a lower side of a glass sheet is set, the greatest distance of the distances between this straight line L and the glass sheet is defined as a "depth of bend D".

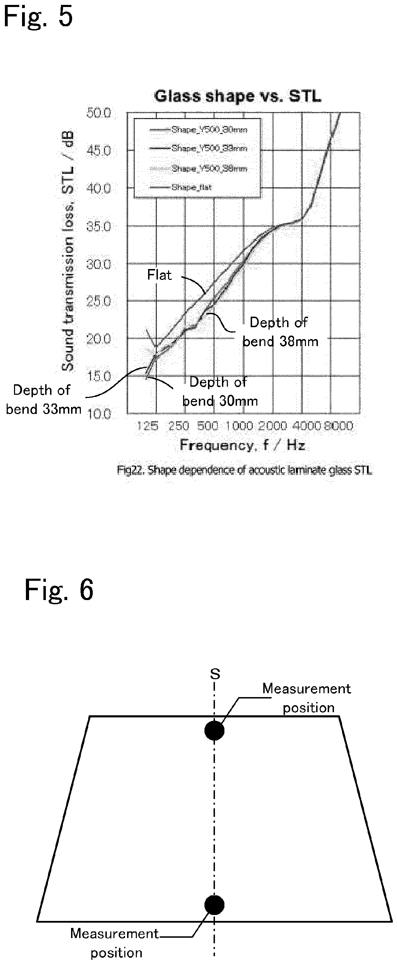

FIG. 5 is a graph showing a relationship between general frequency and sound transmission loss with respect to glass sheets having a curved shape and a glass sheet having a flat shape. It can be seen from FIG. 5 that there is not much difference in the sound transmission loss (STL) among the glass sheets having a curved shape whose depths of bend are within a range of 30 to 38 mm, but when compared with the glass sheet having a flat shape, those curved glass sheets have a low sound transmission loss in a frequency band of 4000 Hz or lower. Accordingly, in the case where a glass sheet having a curved shape is produced, smaller depth of bend is better, but if the depth of bend exceeds 30 mm, it is preferable to set the Young's modulus of the core layer of the interlayer to 18 MPa (frequency 100 Hz, temperature 20°C) or less, as described later.

Here, an example of a method of measuring the thickness of a curved glass sheet will be described. First, with respect to the measurement position, as shown in FIG. 6, the measurement is performed at two positions: an upper position and a lower position on a center line S extending vertically in the center of a glass sheet in the horizontal direction. Although there is no particular limitation on the measuring apparatus, a thickness gauge such as SM-112 manufactured by TECLOCK Corporation can be used, for example. During measurement, the glass sheet is arranged such that the curved surface of the glass sheet is placed on a flat surface, and an end portion of the glass sheet is sandwiched and measured with the above-mentioned thickness gauge. It should be noted that a flat glass sheet can also be measured in the same manner as a curved glass sheet.

### 1-2. Interlayer

Next, the interlayer 13 will be described. The interlayer 13 includes at least one layer. For example, as shown in FIG. 3, the interlayer 13 can be configured by three layers, namely a soft core layer 131 and outer layers 132 that are harder than the core layer 131 and between which the core layer 131 is sandwiched. However, there is no limitation to this configuration, and it is sufficient that the interlayer 13 includes a plurality of layers including the core layer 131 and at least one outer layer 132 arranged on the outer glass sheet 11 side. For example, the interlayer 13 including two layers, namely the core layer 131 and one outer layer 132 arranged on the outer glass sheet 11 side, or the interlayer 13 in which an even number of two or more of the outer layers 132 are arranged on each side of the core layer 131 so that the core layer 131 is arranged at the center, or the interlayer 13 in which an odd number of outer layers 132 are arranged on one side of the core layer 131 and an even number of outer layers 132 are arranged on the other side so that the core layer 131 is sandwiched therebetween can also be formed. It should be noted that in the case where only one outer layer 132 is provided, the outer layer 132 is provided on the outer glass sheet 11 side as mentioned above, which is for the purpose of improving the breakage resistance performance with respect to an external force from the outside of a vehicle or a building. Moreover, when the number of outer layers 132 is increased, the sound insulation performance is improved.

Although there is no particular limitation on the hardness of the core layer 131 as long as the core layer 131 is softer than the outer layer 132, materials of the core layer 131 can be selected based on the Young's modulus, for example. Specifically, at a frequency of 100 Hz and a temperature of 20°C, the Young's modulus is preferably 1 to 20 MPa, more preferably 1 to 18 MPa, and even more preferably 1 to 14 MPa. When the Young's modulus is set to be in such a range, it is possible to prevent a decrease in sound transmission loss in a low frequency range of about 3500 Hz or lower.

In this regard, the inventors of the present invention found that in general, when the Young's modulus of the core layer was reduced, the sound insulation performance was improved in a frequency range of 3000 to 5000 Hz. In this regard, Table 1 below shows the sound insulation performance of a laminated glass having an outer glass sheet and an inner glass sheet made of clear glass, and an interlayer including a core layer and outer layers located on both sides of this core layer. The outer glass sheet has a thickness of 2.0 mm, the inner glass sheet has a thickness of 1.3 mm, and the interlayer has a thickness of 0.76 mm, with the core layer having a thickness of 0.10 mm and each of the outer layers having a thickness of 0.33 mm. Table 1 below shows the sound transmission losses in a frequency range of 1250 to 10000 Hz. Specifically, the sound transmission losses are calculated in a case where the Young's modulus (measured at a frequency of 100 Hz and a temperature of 20°C) of the core layer of the interlayer is set to 25 MPa, 12.5 MPa, and 6.25 MPa (the calculation method is in accordance with a method in Examples, which will be described later), the sound transmission losses in the case where the Young's modulus is set to 25 MPa are used as references (the sound transmission losses in this case are shown as 0 in the table below because they are used as references), and differences in sound transmission loss (in dB) when the Young's modulus is set to 12.5 MPa and 6.25 MPa are shown. In this case, the outer layers have a Young's modulus of 560 MPa and a tanδ of 0.26 (temperature 20°C, frequency 100 Hz). It can be seen from Table 1 that in a frequency range of 3150 to 5000 Hz, the sound transmission loss is improved as the Young's modulus of the core layer of the interlayer is reduced from 25 MPa to 12.5 MPa and 6.25 MPa.

**Table 1**

| | 1250 | 1600 | 2000 | 2500 | 3150 | 4000 | 5000 | 6300 | 8000 | 10000 |
|---|---|---|---|---|---|---|---|---|---|---|
| 6.25 MPa | 0.3 | 0.6 | 1.1 | 1.7 | 2.2 | 2.3 | 0.3 | -2.4 | -1.7 | -1.2 |
| 12.5 MPa | 0.1 | 0.3 | 0.6 | 0.9 | 1.3 | 1.3 | 0 | -1.1 | -0.8 | -0.5 |
| 25 MPa | 0.0 | 0.0 | 0.0 | 0.0 | 0.0 | 0.0 | 0.0 | 0.0 | 0.0 | 0.0 |

With regard to the measurement method, it is possible to use a solid viscoelasticity measuring device DMA 50 manufactured by Metravib and perform frequency dispersion measurement with a strain amount of 0.05%, for example. In the following description, the Young's modulus as used herein refers to a measurement value obtained by using the above-described method, unless otherwise stated. However, although an actual measured value is used in measurement at a frequency equal to or lower than 200 Hz, a value that is calculated based on actual measured values is used at a frequency higher than 200 Hz. This calculated value is based on a master curve that is calculated from actual measured values using the WLF method.

On the other hand, as described later, it is preferable that the outer layers 132 have a large Young's modulus for the purpose of improving the sound insulation performance in a high frequency range, and the Young's modulus can be set to 560 MPa or more, 600 MPa or more, 650 MPa or more, 700 MPa or more, 750 MPa or more, 880 MPa or more, or 1300 MPa or more at a frequency of 100 Hz and a temperature of 20°C. Meanwhile, there is no particular limitation on the upper limit of the Young's modulus of each of the outer layers 132, but the Young's modulus can be set from the viewpoint of workability, for example. It is empirically known that when the Young's modulus is set to 1750 MPa or more, for example, the workability decreases, and in particular, cutting is difficult. Moreover, it is preferable to set the Young's modulus of the outer layer on the outer glass sheet 11 side to be greater than the Young's modulus of the outer layer on the inner glass sheet 12 side. Accordingly, the breakage resistance performance with respect to an external force from the outside of a vehicle or a building can be improved.

At a frequency of 100 Hz and a temperature of 20°C, tanδ of the core layer 131 can be set to 0.1 to 0.9. When tanδ is within the above-mentioned range, the sound insulation performance is improved.

In this regard, the inventors of the present invention found that in general, when tanδ of the core layer was increased, the sound insulation performance was improved in a frequency range of 5000 to 10000 Hz. In this regard, Table 2 below shows the sound insulation performance of a laminated glass having an outer glass sheet and an inner glass sheet made of clear glass, and an interlayer including a core layer and outer layers located on both sides of this core layer. The outer glass sheet has a thickness of 2.0 mm, the inner glass sheet has a thickness of 1.3 mm, and the interlayer has a thickness of 0.76 mm, with the core layer having a thickness of 0.10 mm and each of the outer layers having a thickness of 0.33 mm. It should be noted that in this case, the Young's moduli of the core layer and the outer layers are 12.5 MPa and 560 MPa (measured at a frequency of 100 Hz and a temperature of 20°C), respectively. Table 2 below shows the sound transmission losses in a frequency range of 1250 to 10000 Hz. Specifically, the sound transmission losses are calculated in a case where tanδ (measured at a frequency of 100 Hz and a temperature of 20°C) of the interlayer is set to 0.8, 1.2, and 1.6 (the calculation method is in accordance with a method in Examples, which will be described later), the sound transmission losses in the case where tanδ is set to 0.8 are used as references (the sound transmission losses in this case are shown as 0 in the table below because they are used as references), and differences in sound transmission loss (in dB) when tanδ is set to 1.2 and 1.6 are shown. It should be noted that the outer layers have a tanδ of 0.26. It can be seen from Table 2 that in a frequency range of 5000 to 10000 Hz, the sound transmission loss is improved as tanδ of the interlayer is increased from 0.8 to 1.2 and 1.6.

**Table 2**

| | 1250 | 1600 | 2000 | 2500 | 3150 | 4000 | 5000 | 6300 | 8000 | 10000 |
|---|---|---|---|---|---|---|---|---|---|---|
| 1.6 | -0.1 | -0.2 | -0.3 | -0.4 | -0.4 | 0.2 | 1.4 | 2.0 | 1.5 | 1.2 |
| 1.2 | 0.0 | -0.1 | -0.2 | -0.2 | -0.2 | 0.2 | 0.9 | 1.2 | 0.9 | 0.7 |
| 0.8 | 0.0 | 0.0 | 0.0 | 0.0 | 0.0 | 0.0 | 0.0 | 0.0 | 0.0 | 0.0 |

Although there is no particular limitation on the materials constituting the layers 131 and 132, the materials are required to be such that at least the Young's moduli of the layers can be set within respective ranges as described above. The layer 131 and 132 can be made of a resin material, for example. Specifically, the outer layers 132 can be made of a polyvinyl butyral resin (PVB). A polyvinyl butyral resin has excellent adhesiveness to the glass sheets and penetration resistance and is thus preferable. On the other hand, the core layer 131 can be made of an ethylene vinyl acetate resin (EVA) or a polyvinyl acetal resin, which is softer than the polyvinyl butyral resin constituting the outer layers 132. When the soft core layer 131 is sandwiched between the outer layers, it is possible to significantly improve the sound insulation performance while keeping the adhesiveness and the penetration resistance that are equivalent to those of a single-layered resin interlayer.

In general, the hardness of a polyvinyl acetal resin can be controlled by adjusting (a) the degree of polymerization of polyvinyl alcohol, which is the starting material, (b) the degree of acetalization, (c) the type of plasticizer, (d) the ratio of the plasticizer to be added, and the like. Accordingly, a hard polyvinyl butyral resin that is used for the outer layers 132 and a soft polyvinyl butyral resin that is used for the core layer 131 can be produced with the same polyvinyl butyral resin by appropriately adjusting at least one condition selected from the aforementioned conditions. Furthermore, the hardness of a polyvinyl acetal resin can be controlled based on the type of aldehyde that is used for acetalization and whether co-acetalization using a plurality of kinds of aldehydes or pure acetalization using a single kind of aldehyde is performed. Although not necessarily applicable to every case, the larger the number of carbon atoms of the aldehyde that is used to obtain a polyvinyl acetal resin, the softer the resulting polyvinyl acetal resin tends to be. Accordingly, for example, if the outer layers 132 are made of a polyvinyl butyral resin, a polyvinyl acetal resin that is obtained by acetalizing an aldehyde having 5 or more carbon atoms (e.g., n-hexyl aldehyde, 2-ethylbutyl aldehyde, n-heptyl aldehyde, or n-octyl aldehyde) with polyvinyl alcohol can be used for the core layer 131. It should be noted that there is no limitation to the above-mentioned resins and the like as long as predetermined Young's moduli can be obtained.

The total thickness of the interlayer 13 is not particularly specified, but is preferably 0.3 to 6.0 mm, more preferably 0.5 to 4.0 mm, and even more preferably 0.6 to 2.0 mm. Meanwhile, the thickness of the core layer 131 is preferably 0.1 to 2.0 mm and more preferably 0.1 to 0.6 mm. On the other hand, it is preferable that the thickness of each of the outer layers 132 is larger than the thickness of the core layer 131. Specifically, the thickness of each of the outer layers 132 is preferably 0.1 to 2.0 mm and more preferably 0.1 to 1.0 mm. Alternatively, it is also possible to fix the total thickness of the interlayer 13 and adjust the thickness of the core layer 131 without exceeding the fixed total thickness.

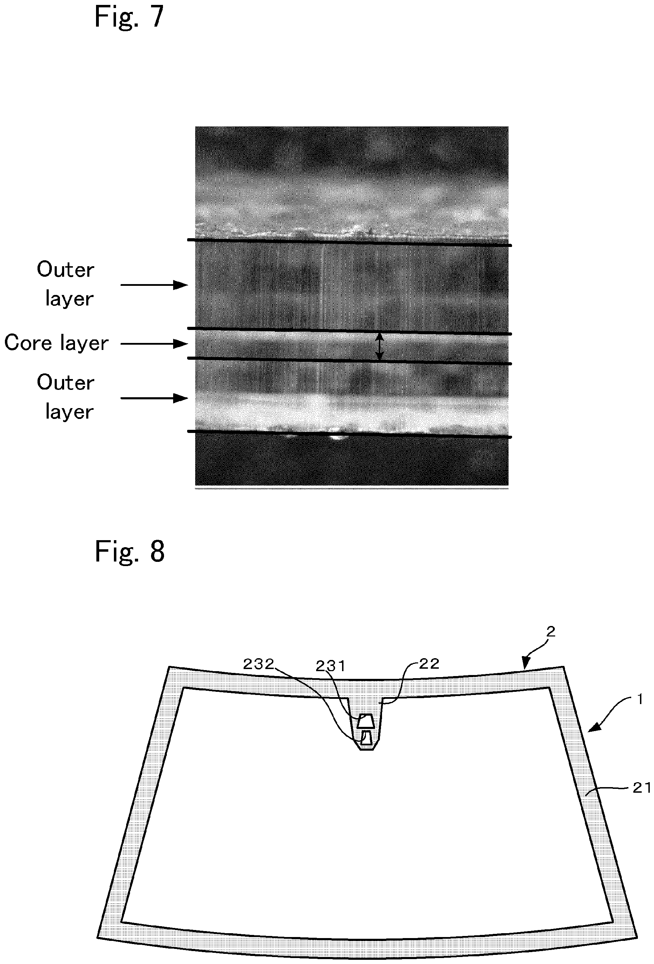

The thicknesses of the core layer 131 and the outer layers 132 can be measured as described below, for example. First, the cross section of a laminated glass is enlarged by a factor of 175 and displayed using a microscope (e.g., VH-5500 manufactured by Keyence Corporation). Then, the thicknesses of the core layer 131 and the outer layers 132 are visually identified and measured. At this time, in order to eliminate variations seen in visual identification, the measurement is performed five times, and average values are taken as the thicknesses of the core layer 131 and the outer layers 132. For example, an enlarged photograph of a laminated glass as shown in FIG. 7 is taken, in which the core layer and the outer layers 132 have been identified, and the thicknesses of the identified core layer and outer layers 132 are measured.

It should be noted that the core layer 131 and the outer layers 132 of the interlayer 13 are not required to have a constant thickness over the entire surface. For example, the core layer 131 and the outer layers 132 can also have a wedge shape so as to be suited to a laminated glass that is used for a head-up display. In this case, the thicknesses of the core layer 131 and the outer layers 132 of the interlayer 13 are measured at positions having the smallest thickness, that is, in the lowest side portion of the laminated glass. If the interlayer 3 has a wedge shape, the outer glass sheet and the inner glass sheet are not arranged in parallel, but it should be construed that such an arrangement is also included in the arrangement of the glass sheets of the present invention. That is, the arrangement according to the present invention includes the arrangement of the outer glass sheet 11 and the inner glass sheet 12 when the interlayer 13 including the core layer 131 and the outer layers 132 whose thicknesses increase at a rate of change of 3 mm or less per meter is used, for example.

Although there is no particular limitation on the method of manufacturing the interlayer 13, examples thereof include a method in which a resin component, such as the above-described polyvinyl acetal resin, a plasticizer, and other additives, if necessary, are mixed and uniformly kneaded, and then the layers are collectively extruded, and a method in which two or more resin films that are produced using this method are laminated with a pressing process, a lamination process, or the like. In the method of laminating with the pressing process, the lamination process, or the like, each of the resin films before laminating may have a single-layer structure or a multilayer structure. Moreover, the interlayer 13 may include a single layer instead of the plurality of layers as mentioned above.

### 1-3. Infrared transmittance of glass sheet

As mentioned above, the windshield according to this embodiment is used for an automobile front safety system using a measurement unit such as a laser radar or a camera. In such safety systems, infrared rays are emitted toward a preceding vehicle to measure the velocity of a preceding automobile and the distance to the preceding automobile. Therefore, infrared transmittance in a predetermined range is required to be achieved in the laminated glass (or a single glass sheet).

With regard to such a transmittance, when a regular sensor is used in a laser radar, for example, a useful transmittance with respect to light (infrared rays) having a wavelength of 850 to 950 nm is 20% or more and 80% or less, and preferably 20% or more and 60% or less. A method of measuring transmittance is performed in accordance with JIS R3106, and UV3100 (manufactured by Shimadzu Corporation) can be used as a measurement apparatus. Specifically, a transmittance with respect to unidirectional light that is emitted at a right angle to the surface of the laminated glass is measured.

Some of the safety systems as mentioned above use not a laser radar but an infrared camera to measure the velocity of a preceding vehicle and the distance to the preceding vehicle. In such a case, when a regular camera is used in a laser radar, for example, a useful transmittance with respect to light (infrared rays) having a wavelength of 700 to 800 nm is 30% or more and 80% or less, and preferably 40% or more and 60% or less. A method of measuring transmittance is performed in accordance with ISO9050.

### 2. Mask Layer

Next, the mask layer 2 will be described. The mask layer 2 as shown in FIG. 8 is formed on the glass sheet 1 according to this embodiment. The mask layer 2 is laminated on the glass sheet, but there is no particular limitation on its position. For example, when the glass sheet is constituted by a single glass sheet, the mask layer 2 can be laminated on the surface on the vehicle interior side. On the other hand, when the glass sheet is constituted by a laminated glass as shown in FIG. 3, the mask layer 2 can be laminated on at least one of the surface on the vehicle interior side of the outer glass sheet 11, the surface on the vehicle exterior side of the inner glass sheet 12, and the surface on the vehicle interior side of the inner glass sheet 12. It is preferable that the mask layers 2 having substantially the same shape are formed on both the surface on the vehicle interior side of the outer glass sheet 11 and the surface on the vehicle interior side of the inner glass sheet 12, for example, out of these surfaces because portions of the glass sheets 11 and 12 on which the mask layers 2 are laminated are curved in the same manner.

The mask layer 2 serves as a dark-colored region for concealing, from the outside, an adhesive that is applied to attach the glass sheet 1 to a vehicle body, and the like, and includes a peripheral edge mask layer 21 that is formed at the outer peripheral edge of the glass sheet 1 and a center mask layer 22 that extends downward from the peripheral edge mask layer 21 at the center of the upper edge of the glass sheet 1. The above-described measurement unit 4 is attached to the center mask layer 22. It is sufficient that the measurement unit 4 is arranged such that light emitted by a sensor 5 passes through the center of an opening and light reflected by a preceding vehicle and an obstacle can be received, as described later. Although various materials can be used to form the mask layer 2, there is no limitation on the materials as long as the mask layer 2 can block a field of vision from the outside of the vehicle, and the mask layer 2 can be formed by applying ceramic of a dark color such as black to the glass sheet 1, for example.

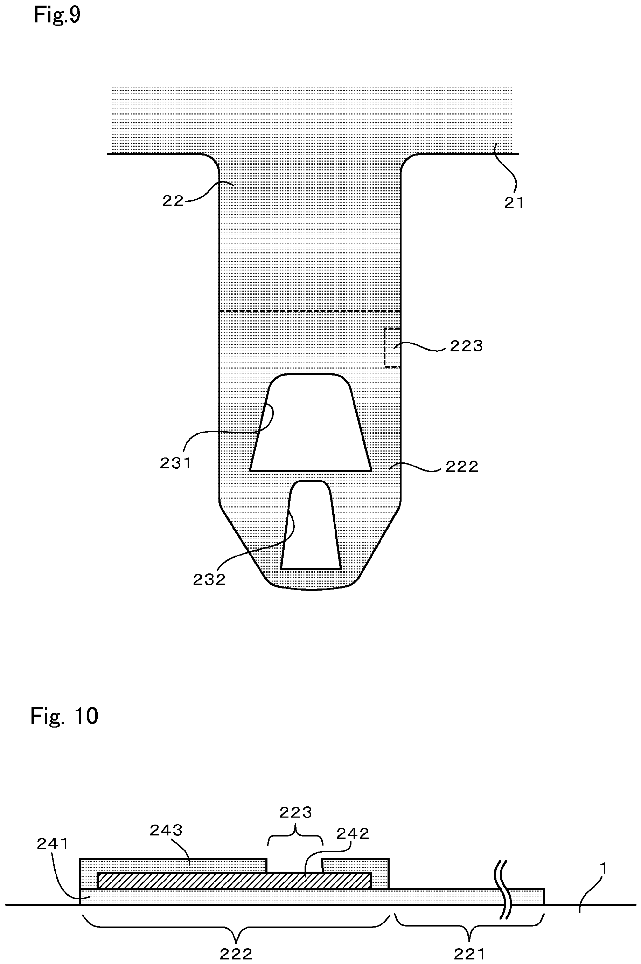

Next, the center mask layer 22 will be described. As shown in FIG. 9, the center mask layer 22 is formed in a rectangular shape that extends vertically, and two openings that are lined up in the vertical direction, namely an upper side opening 231 and a lower side opening 232, are formed in the center mask layer 22. Both the upper side opening 231 and the lower side opening 232 are formed in a trapezoidal shape, and the width of the lower side opening 232 in the left-right direction is approximately half of that of the upper side opening 231. However, the lengths in the vertical direction are substantially the same. Although there is no particular limitation on the sizes of the openings, the upper side opening 231 can be formed so as to have a longitudinal length of about 58 mm and a lateral length of about 58 mm, and the lower side opening 232 can be formed so as to have a longitudinal length of about 52 mm and a lateral length of about 27 mm.

The center mask layer 22 has three regions, and is constituted by an upper region 221 that is located on the upper side with respect to the upper opening 231, a lower region 222 that is located on the lower side with respect to this upper region 221 and in which both the openings 231 and 232 are formed, and a small rectangular lateral region 223 that is formed in the lateral portion of this lower region 222.

Next, the layer configurations of the respective regions will be described. As shown in FIG. 10, the upper region 221 includes a single first ceramic layer 241 made of black ceramic. The lower region 222 includes three layers that are laminated on the inner surface of the glass sheet 1, namely the above-mentioned first ceramic layer 241, a silver layer 242, and a second ceramic layer 243. The silver layer 242 is made of silver, and the second ceramic layer 243 is made of the same material as the material of the first ceramic layer 241. The lateral region 223 includes two layers that are laminated on the inner surface of the glass sheet 1, namely the first ceramic layer 241 and the silver layer 242, and the silver layer 242 is exposed to the vehicle interior side. The first ceramic layer 241, which is the undermost layer, is shared by all the regions, and the silver layer 242, which is the second layer, is shared by the lower region 222 and the lateral region 223. It should be noted that the thicknesses of the ceramic layers 241 and 243 can be set to 10 to 20 µm, for example, in order to secure a light blocking property. Moreover, as described later, a bracket of the measurement unit 4 is bonded, with an adhesive, to the center mask layer 22 formed on the surface on the vehicle interior side of the inner glass sheet 12, and therefore, such a thickness is preferable in order to secure an adhesive property as well. This is because there is a risk that a urethane-silicon based adhesive may be deteriorated by ultraviolet rays or the like, for example.

The peripheral edge mask layer 21 and the center mask layer 22 can be formed as described below, for example. First, the first ceramic layer 241 is applied to the glass sheet. This first ceramic layer 241 is shared with the peripheral edge mask layer 21. Next, the silver layer 242 is applied to the first ceramic layer 241 in the regions corresponding to the lower region 222 and the lateral region 223. Lastly, the second ceramic layer 243 is applied to the region corresponding to the lower region 222. It should be noted that, in the lower region 222, the region in which the silver layer 242 is formed corresponds to the position at which the sensor of the measurement unit 4, which will be described later, is arranged. Moreover, the silver layer 242, which is exposed in the lateral region 223, is provided with wiring for grounding. Although the ceramic layers 241 and 243 and the silver layer 242 can be formed using a screen printing process, these layers can also be produced, in addition, by transferring a transfer film for firing to the glass sheet and firing it.

Although various materials can be used to form the ceramic layers 241 and 243, the composition listed below can be used, for example.

**Table 3**

| | | First and second colored ceramics pastes |
|---|---|---|
| Pigment *1 | mass% | 20 |
| Resin (cellulose resin) | mass% | 10 |
| Organic solvent (pine oil) | mass% | 10 |
| Glass binder *2 | mass% | 65 |
| Viscosity | dPs | 150 |

| | | |
|---|---|---|
| *1, Main components: copper oxide, chromium oxide, iron oxide, and manganese oxide *2, Main components: bismuth borosilicate, zinc borosilicate | | |

Although there is no particular limitation on the composition of the silver layer 242, the composition listed below can be used, for example.

**Table 4**

| | | Conductive ceramics pastes |
|---|---|---|
| Silver particles (average particle diameter: 10µm) | mass% | 70 |
| Glass binder *1 | mass% | 10 |
| Resin (cellulose resin) | mass% | 5 |
| Organic medium (terpineol) | mass% | 15 |
| Viscosity | dPs | 180 |

| | | |
|---|---|---|
| *1, Main components: bismuth borosilicate, zinc borosilicate | | |

The screen printing can be performed under the conditions that a polyester screen of 355 mesh is used, the coating thickness is 20 µm, the tension is 20 Nm, the squeegee hardness is 80 degrees, the attachment angle is 75°, and the printing speed is 300 mm/s, for example, and the ceramic layers and the silver layer can be formed by performing drying in a drying furnace at 150°C for 10 minutes. It should be noted that when the first ceramic layer 241, the silver layer 242, and the second ceramic layer 243 are laminated in this order, it is sufficient that the above-described screen printing and drying are repeated.

### 3. Method of Manufacturing Windshield

Next, a method of manufacturing a windshield will be described. First, a manufacturing line for a glass sheet will be described.

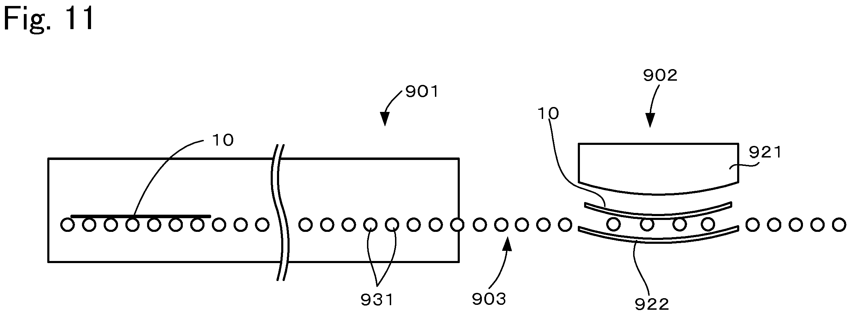

As shown in FIG. 11, a heating furnace 901 and a molding apparatus 902 are arranged in this order from the upstream side to the downstream side in this manufacturing line. A roller conveyor 903 is arranged extending from the heating furnace 901 via the molding apparatus 902 toward the downstream side of the molding apparatus 902, and the glass sheet 10 to be processed is conveyed using this roller conveyor 903. The glass sheet 10 has a flat shape until it is conveyed into the heating furnace 901, and the above-described mask layer 2 is laminated on this glass sheet 10, followed by the conveyance into the heating furnace 901.

The heating furnace 901 can be variously configured, and an example thereof is an electric heating furnace. This heating furnace 901 includes a furnace main body having a polygonal tube shape in which end portions on the upstream side and the downstream side are open, and the roller conveyor 903 is arranged inside the furnace main body from the upstream side toward the downstream side. Heaters (not shown) are respectively arranged on the upper surface, the lower surface, and a pair of lateral surfaces of the inner wall surface of the furnace main body, and heat the glass sheet 10 passing through the heating furnace 901 to a temperature at which the glass sheet 10 can be molded, such as a temperature near a softening point of glass.

The molding apparatus 902 is configured to press the glass sheet using an upper mold 921 and a lower mold 922 to mold the glass sheet into a predetermined shape. The upper mold 921 has a curved shape protruding downward that covers the entire top surface of the glass sheet 10, and is configured to be capable of moving up and down. The lower mold 922 is formed in a frame shape that corresponds to the peripheral edge portion of the glass sheet 10, and the top surface thereof has a curved shape so as to correspond to the upper mold 921. With this configuration, the glass sheet 10 is molded into a final curved shape through press molding between the upper mold 921 and the lower mold 922. The roller conveyor 903 is arranged inside the frame of the lower mold 922 and is configured to be capable of moving up and down so as to pass through the inside of the frame of the lower mold 922. Although not shown, an annealing apparatus (not shown) is arranged on the downstream side of the molding apparatus 902 and cools the molded glass sheet.

The roller conveyor 903 as mentioned above is a known roller conveyor and has a configuration in which a plurality of rollers 931 that are each rotatably supported at both end portions are arranged at a predetermined interval. Various methods can be used to drive the rollers 931, and an example thereof is a method in which a sprocket is attached to an end portion of each of the rollers 931 and a chain is wound around the sprockets to drive the rollers 931. The conveying speed of the glass sheet 10 can be adjusted by adjusting the rotation speed of the rollers 931. It should be noted that the lower mold 922 of the molding apparatus 902 may have a shape that can be in contact with the entire surface of the glass sheet 10. In addition, there is no particular limitation on the shapes of the upper mold and the lower mold as long as the glass sheet can be molded using the molding apparatus 902.

After the outer glass sheet 11 and the inner glass sheet 12 are molded in this manner, the interlayer 13 is sandwiched between the outer glass sheet 11 and the inner glass sheet 12, and these are placed into a rubber bag and preliminarily bonded together at about 70 to 110°C under vacuum suction. Preliminary bonding can be performed using a method other than this method. For example, the interlayer 13 is sandwiched between the outer glass sheet 11 and the inner glass sheet 12, and these are heated at 45 to 65°C in an oven. Subsequently, this laminated glass is pressed by a roller at 0.45 to 0.55 MPa. Then, this laminated glass is again heated at 80 to 105°C in an oven and thereafter again pressed by a roller at 0.45 to 0.55 MPa. Thus, preliminary bonding is finished. It should be noted that when a blocking film 70 is attached to the surface on the vehicle exterior side of the inner glass sheet 12, the blocking film 70 is attached prior to the preliminary bonding.

Next, permanent bonding is performed. The preliminarily bonded laminated glass is permanently bonded using an autoclave at a pressure of 8 to 15 atmospheres and at 100 to 150°C, for example. Specifically, permanent bonding can be performed in the conditions of a pressure of 14 atmospheres and 145°C, for example. When a blocking film 70 is attached to the surface on the vehicle interior side of the inner glass sheet 12 thereafter, the blocking film 70 is attached after the permanent bonding. Thus, the laminated glass according to this embodiment is manufactured.

It should be noted that when a single glass sheet is used as the glass sheet, it is sufficient that one of the above-described glass sheets is used. The method of manufacturing the glass sheet is performed in the same manner: specifically, a mask layer is formed on the inner surface of the glass sheet, heating is performed, and then the glass sheet is molded into a curved shape.

Moreover, in attaching such a laminated glass to an automobile, the attachment angle of the laminated glass is preferably set to an angle of 45 degrees or less to the vertical.

### 4. Measurement Unit

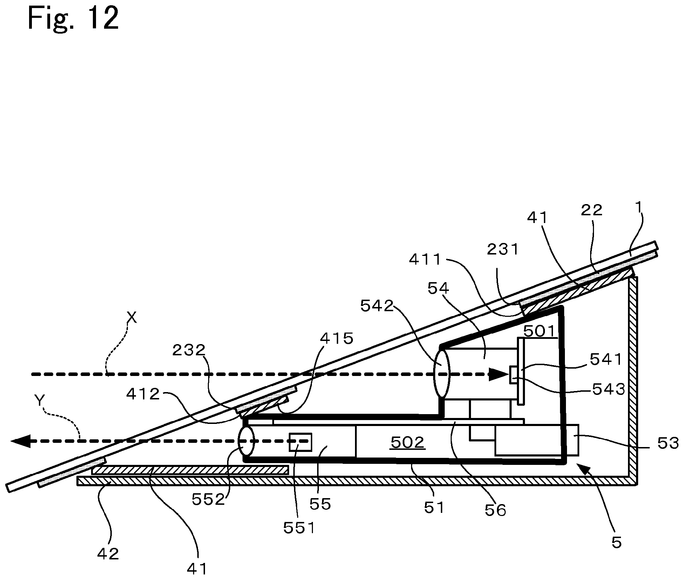

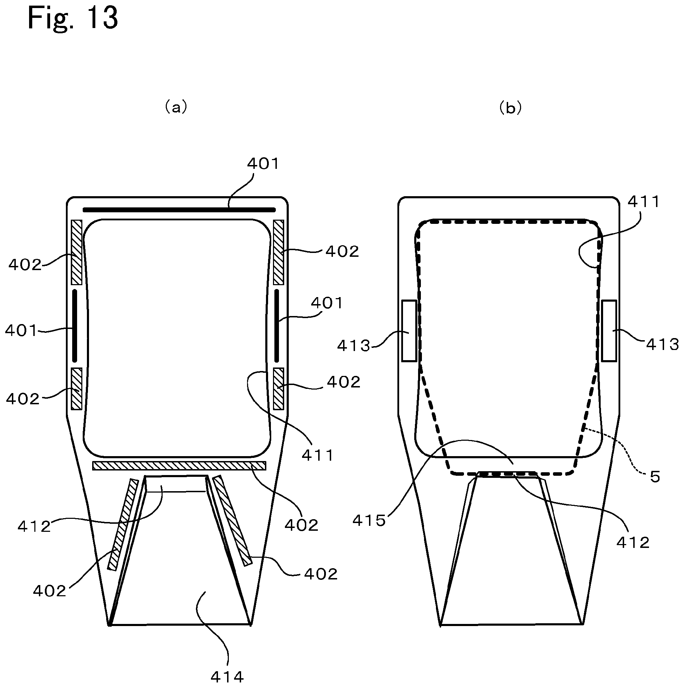

Next, the measurement unit will be described with reference to FIGS. 12 and 13. FIG. 12 is a cross-sectional view showing a schematic configuration of the measurement unit 4 attached to a glass sheet, and FIGS. 13(a) and 13(b) are diagrams showing a bracket as viewed from a vehicle exterior side and a vehicle interior side, respectively. As shown in FIG. 12, this measurement unit 4 includes a bracket (attachment member) 41 that is fixed to the inner surface of the glass sheet 1, the sensor 5 (information acquisition device) that is supported by the bracket 41, and a cover 42 that covers the bracket 41 and the sensor 5 from the vehicle interior side.

As shown in FIG. 13, the bracket 41 is formed in a rectangular shape, and is fixed to the center mask layer 22 formed on the surface on the vehicle interior side of the inner glass sheet 12 as described above, using an adhesive 401 and a double-sided adhesive tape 402. Two openings, namely a first opening 411 and a second opening 412, that are vertically aligned and separated by a separating portion 415 are formed in the bracket 41, and the sensor 5 is attached to the larger first opening 411, which is formed on the upper side. A recessed portion 414 having a trapezoidal shape is formed in this bracket below the second opening 412 as viewed from the vehicle exterior side. This recessed portion 414 is inclined such that the depth is the largest at the upper end and decreases toward the lower end, and the second opening 412 is formed at the upper end. As shown in FIG. 13(b), supporting portions 413 that support the sensor 5 are attached to both sides of the first opening 411 on the surface on the vehicle interior side of the bracket 41, and the sensor 5 is fixed between the supporting portions 413. As described later, an emission lens 552 is attached to the front end portion (lower end portion in FIG. 13) of the fixed sensor 5 and faces the outside through the second opening 412 and the recessed portion 414. That is, the recessed portion 414 forms a gap with the glass sheet and serves as a path of light emitted through the second opening 412. On the other hand, a light receiving lens 542 faces the outside through the first opening 411. It should be noted that the upper side, the right side, the lower side, and the left side of the frame of the bracket 41 shown in FIG. 13 correspond to a first side, a second side, a third side, and a fourth side of the present invention, respectively. In this embodiment, the recessed portion 414 is integrally formed in the bracket 41, and a portion of the bracket 41 that forms the recessed portion 414 corresponds to a path member of the present invention.

As shown in FIG. 13(a), the surface on the vehicle exterior side of the bracket 41 is a surface to be fixed to the center mask layer 22 (this surface corresponds to a fixed portion of the present invention, and is referred to as "fixed portion" hereinafter), and the adhesive 401 is applied to this surface at the positions corresponding to the supporting portions 413 and the portion of the peripheral edge above the first opening 411 so as to have a bead shape. The known double-sided adhesive tapes 402 are attached to the upper side and lower side with respect to the adhesive 401 located at each position corresponding to a supporting portion 413. Furthermore, the double-sided adhesive tapes 402 are attached to the separating portion 415 and both sides of the recessed portion 414. All the portions to which the double-sided adhesive tapes 402 are attached or the adhesive 401 is applied and that are fixed to the mask layer 22 serve as the fixed portions. It should be noted that various types of adhesives can be used as the adhesive, and examples thereof include a urethane resin adhesive and an epoxy resin adhesive. The epoxy resin adhesive is unlikely to flow due to its high viscosity and thus can be used advantageously.

A harness or the like (not shown) is attached to the bracket 41, and then the cover 42 is attached thereto from the vehicle interior side as shown in FIG. 12. Accordingly, the sensor 5 and the bracket 41 cannot be seen from the vehicle interior side. In this manner, the sensor 5 is accommodated in a space surrounded by the bracket 41, the cover 42, and the glass sheet 1. It should be noted that since the center mask layer 22 has been formed, the measurement unit 4 also cannot be seen from the vehicle exterior side with the exception of the upper opening 231 and the lower opening 232.

Next, the overview of the sensor 5 will be described with reference to FIG. 12. As shown in this diagram, the sensor 5 includes a housing 51 having a triangular shape in a side view, and the inside of the housing 51 is partitioned into an upper space 501 and a lower space 502. Moreover, a connector 53 is attached to the back surface of the housing 51 and is used for connection to an external device.

A first supporting portion 54 is arranged in the upper space 501, and a first control substrate 541 and a light receiving lens 542 are arranged in a direction toward the front side from the rear side in this first supporting portion 54. A light receiving element 543 is installed on the first control substrate 541 to receive a laser beam that passes through the light receiving lens 542 and convert the laser beam into electric signals. The electric signals are amplified in the first control substrate 541 and transmitted to a second control substrate 56, which will be described later. The light receiving lens 542 is arranged so as to face the outside through the first opening 411 of the bracket 41 via the upper opening 231 of the center mask layer 22 as described above. In particular, the sensor 5 is supported by the bracket 41 such that a passage path of light to be received by the light receiving element 543 passes through a position X near the center of the upper opening 231 (see FIG. 12). Moreover, reflected light in multiple directions that has been reflected by a preceding vehicle and an obstacle passes through the center of the upper opening 231 and is received by the light receiving element 543.

On the other hand, a second supporting portion 55 is arranged in the lower space 502, and a laser emitting element 551 and an emission lens 552 are supported in this order in a direction toward the front side from the rear side in this second supporting portion 55. The laser emitting element 551 is a laser diode or the like for emitting a laser beam in a near infrared wavelength range of 850 nm to 950 nm, and the emission lens 552 is a lens for shaping the laser beam emitted by the laser emitting element 551 into a predetermined beam shape. As described above, the emission lens 552 is arranged so as to face the outside through the housing 51 via the second opening 412 of the bracket 41 and the lower opening 232 of the center mask layer 22. In particular, the sensor 5 is supported by the bracket 41 such that a passage path of a laser beam emitted by the laser emitting element 551 passes through a position Y near the center of the lower opening 232 (see FIG. 12).

The second control substrate 56 is arranged on the upper surface of the second supporting portion 55 and performs driving of the laser emitting element 551, processing of electric signals transmitted from the first control substrate 541, and the like.

The operation of the measurement unit 4 will be described below. First, the first control substrate 541 transmits a laser beam pulse from the laser emitting element 551. The distance from a preceding vehicle or an obstacle to the subject vehicle is calculated based on the time until reflected light, which is the laser beam reflected by the preceding vehicle or the obstacle, is received by the light receiving element 543. The calculated distance is transmitted to an external device via the connector 53 and used for control of a brake and the like.

### 6. Features

As described above, with this embodiment, the sensor 5 is supported by the supporting portions 413 on the bracket 41, and the positions corresponding to the supporting portions 413 are fixed to the center mask layer 22 using the adhesive 401. Therefore, the portions of the bracket 41 to which the sensor 5 is attached are firmly fixed to the mask layer 22, thus making it possible to prevent shifting or vibration of the sensor 5. Moreover, since the double-sided adhesive tapes 402 are attached to the vicinities of the adhesive 401, the double-sided adhesive tapes 402 can be used as fixing materials for temporary bonding until the adhesive 401 dries. In particular, the double-sided adhesive tapes 402 have a constant thickness (because the double-sided adhesive tapes 402 have a predetermined thickness and are not significantly deformed), and therefore, the thickness of the adhesive 401 can be set to be equal to the thickness of the double-sided adhesive tapes 402. This makes it possible to prevent the adhesive 401 from being excessively pressed and protruding from the bracket 41. Therefore, adjusting the application amount of the adhesive makes it possible to reliably prevent the adhesive from protruding from the fixed portion. Furthermore, in the case where the double-sided adhesive tapes 402 are used, the double-sided adhesive tapes 402 have no fluidity unlike the adhesive and thus do not protrude from the bracket 41 even when the bracket 41 has a small width. This makes it possible to prevent the external appearance from being deteriorated due to protrusion. The double-sided adhesive tapes 402 can be used in a region having a small width. It should be noted that, in this embodiment, the adhesive 401 is used as a main fixing material and the double-sided adhesive tapes 402 are used as a temporary fixing material, but fixing materials other than these can also be used, and a double-sided adhesive tape can also be used as a main fixing material if the double-sided adhesive tape has a high adhesive property.

In order to attach the bracket 41 to the glass sheet 1, it is sufficient that at least the vicinities of the positions corresponding to the supporting portions 413 in the fixed portions are fixed to the center mask layer 22 using the adhesive 401 or the double-sided adhesive tapes 402, but in addition, in this embodiment, the adhesive 401 or the double-sided adhesive tapes 402 are also provided to the portion of the peripheral edge above the first opening 411, the separating portion 415, and both sides of the recessed portion 414, and used as the light shielding members. The reason for this is as follows. That is, since the glass sheet 1 according to this embodiment is curved, there is a risk that a gap may be formed between the bracket 41 and the glass sheet 1. Entry of light from the outside into the first opening 411 or the second opening 412 through such a gap may affect light emitted by the sensor 5 or light from the outside to be received by the sensor 5.

To address this, in this embodiment, the adhesive 401 or the double-sided adhesive tapes 402 are also arranged in the portion of the peripheral edge above the first opening 411, the separating portion 415, and the recessed portion 414 as mentioned above, and thus the surroundings of the first opening 411 are shielded from light while the surroundings of the recessed portion 414, that is, the surroundings of the second opening 412, are shielded from light. It is particularly preferable to shield the surroundings of the recessed portion 414 out of these portions from light because the recessed portion 414 serves as a path of light that is formed between the opening 232 in the center mask layer 22 and the sensor 5. Moreover, if a gap exists near the recessed portion 414 or the second opening 412, there is a risk that an emitted laser beam will be reflected by the glass sheet and the reflected light will leak to the outside through the gap. The leaked laser beam may pass through the first opening 414 as stray light and be received, causing a malfunction in such a case. Also for such a reason, it is preferable to provide the light shielding members for filling the gap near the recessed portion 414 or the second opening 412. Regarding the upper side, which is a portion above the first opening 411, sunlight may enter from above and cause malfunction of the sensor 5, and therefore, it is preferable to provide the light shielding member to this portion. It should be noted that the light shielding members do not need to be arranged in the entire surroundings of the recessed portion 414, but it is particularly preferable to arrange the light shielding member near the second opening.

The adhesive 401 and the double-sided adhesive tapes 402 can be mainly elastically deformed. Therefore, the adhesive 401 and the double-sided adhesive tapes 402 can be deformed depending on the size of the gap, thus making it possible to effectively fill the gap. As a result, the openings 411 and 412 are shielded from light from the outside, thus making it possible to prevent malfunction of the sensor 5. It should be noted that, in general, a double-sided adhesive tape is less likely to be deformed than an adhesive, but to address this, it is sufficient that a thick double-sided adhesive tape is used or a plurality of double-sided adhesive tapes are laminated, for example.

It should be noted that although both the adhesive 401 and the double-sided adhesive tapes 402 can be used as the light shielding member, the double-sided adhesive tapes 402 can be used in narrow regions and have no fluidity as mentioned above, and thus are advantageous. However, an adhesive may exhibit higher fixing strength. There is no particular limitation on positions at which the light shielding members are attached, and it is preferable that the light shielding members surround substantially the entire periphery of the bracket 41. However, the light shielding members do not necessarily have to surround the entire periphery of the bracket 41, and it is sufficient that substantially no gap is formed between the bracket 41 and the mask layer 2. Although it is necessary to attach the light shielding members to the vicinities of the recessed portion 414 because the recessed portion 414 serves as a path of light, the light shielding members do not necessarily have to be provided on the entire periphery of the recessed portion 414.

Incidentally, it is conceivable that the light shielding member is made of sponge, rubber, or the like that can be elastically deformed as well as the above-described adhesive or double-sided adhesive tape. As a result of investigation of this point, when a light shielding member is made of a material having low elasticity, for example, this light shielding member can be used as the light shielding member of the present invention, whereas when a light shielding member is made of a material having high elasticity and used together with an adhesive or a double-sided adhesive tape, for example, a problem may arise. When an adhesive or a double-sided adhesive tape is provided near a light shielding member having high elasticity (referred to as "elastic light shielding member" hereinafter), for example, force is applied in a direction in which the bracket 41 is separated from the glass sheet 1 or the mask layer due to elastic force of the elastic light shielding member, and this may cause a problem in that the adhesive or the double-sided adhesive tape near the elastic light shielding member comes off. Therefore, it is preferable to use such a light shielding member having elastic force to an extent that other adhesive or double-sided adhesive tape does not come off.

Furthermore, an effect as described below can be obtained. The mask layer 2 is laminated on the glass sheet 1 through screen printing or the like as mentioned above. Thereafter, the glass sheet 1 is heated and molded. At this time, the mask layer 2 has a dark color such as black, and thus the glass sheet 1 absorbs a larger amount of heat in this region compared with the regions in which the mask layer 2 is not formed, such as the upper opening 231 and the lower opening 232. In addition, the thermal expansion coefficient of the mask layer 2 is different from that of the glass sheet 1, and therefore, compressive stress or tensile stress occurs during molding in the region in which the mask layer 2 has been formed. Moreover, distortion occurs near the boundary between the glass sheet 1 and the upper opening 231 and the boundary between the glass sheet 1 and the lower opening 232 due to the difference in the curvature of the glass surface between the outer glass sheet and the inner glass sheet (hereinafter, a region in which distortion occurs is referred to as "distortion region"). If the windshield is made of a laminated glass, and the thickness of the outer glass sheet 11 is larger than that of the inner glass sheet, the inner glass sheet 12 curves more significantly than the outer glass sheet 11 near the boundaries, and therefore, distortion is more prominent in a laminated glass constituted by glass sheets having different thicknesses. As a result, when a laser beam is emitted and received, there is a risk that the laser beam that passes through the distortion region cannot be accurately emitted or received due to light being refracted due to the distortion.

To address this, in this embodiment, the sensor 5 is supported by the bracket 41 such that paths of light respectively pass through positions near the centers of the upper opening 231 and the lower opening 232 in the mask layer 22, thus making it possible to prevent light from passing through the region in which distortion occurs as mentioned above. However, the path of light does not necessarily have to pass the position near the center, and it is sufficient that sensor 5 is attached such that passage paths X of light during emission and/or reception of light are spaced apart from the peripheral edges of the openings 231 and 232 in the mask layer 2 by at least 4 mm, and preferably 6 mm.

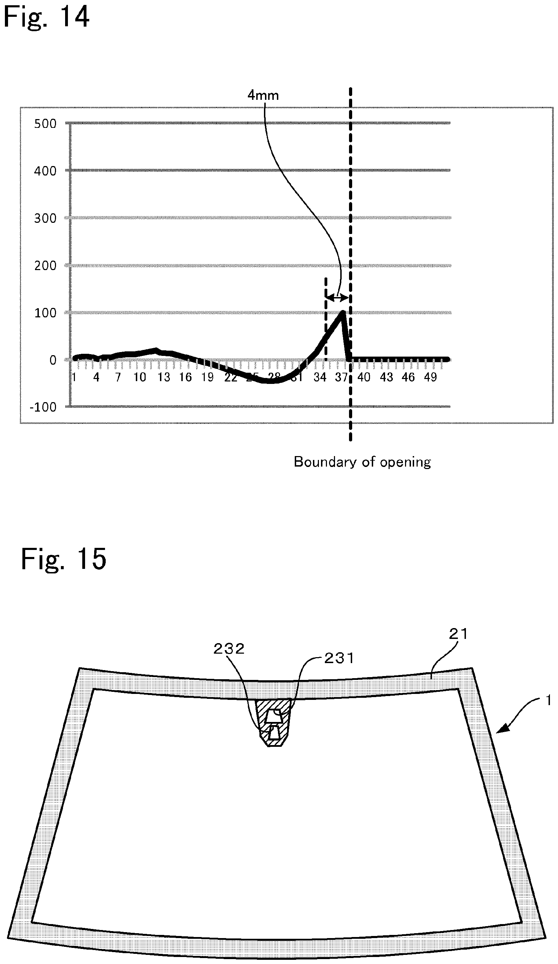

As a result of investigation of this point, when distortion of the glass sheet near the boundary of the mask layer 2 was measured in the glass sheet manufactured as mentioned above, for example, the results as shown in FIG. 14 were obtained. In this graph, the horizontal axis indicates the length of the glass sheet in a surface direction, and the vertical axis indicates the lens power (mili diopter: inverse of focal length). The method of measuring the lens power is as described below. First, light is projected at the glass sheet in a darkroom, and a shadow is formed on a screen behind the glass sheet. At this time, if there is a convex lens on the glass sheet, the light is condensed, and the shadow on the screen becomes bright. On the other hand, if there is a concave lens on the glass sheet, the shadow becomes dark. Here, there is a correlation between the lens power and the brightness of the shadow on the screen, and the relationship between the lens power and the brightness can be determined by placing a lens whose lens power is already known and then measuring the brightness on the screen. Accordingly, when the target glass sheet is arranged, and the brightness on the screen is measured over the entire glass sheet, the lens power of the glass sheet can be obtained.

As a result of such measurement, it can be seen from FIG. 14 that distortion increases from the mask layer toward the non-mask layer because the lens power sharply increases near the boundary therebetween. Moreover, it can be seen that distortion decreases at a position that is a predetermined length away from the boundary, and distortion disappears at a position farther away therefrom.

### 7. Modified Examples

Although the embodiment of the present invention has been described above, the present invention is not limited to the above embodiment, and various modifications can be carried out without departing from the gist of the invention.

### 7.1

Although an example of the sensor 5 for measuring the distance between vehicles is shown in the above embodiment, there is no limitation to this. There is no particular limitation on the sensor as long as the sensor can be used to measure the distance between vehicles by emitting light and receiving the reflected light.

In the above embodiment, the sensor 5 for measuring the distance between vehicles is used as the information acquisition device of the present invention, but there is no limitation to this, and various information acquisition devices can be used. That is, there is no limitation as long as the information acquisition device emits and/or receives light in order to acquire information from the outside of the vehicle. Various devices can be used such as a visible light/infrared camera for measuring the distance between vehicles, a light receiving device for receiving signals from the outside of the vehicle that are emitted by an optical beacon or the like, and a camera using visible light and/or infrared rays that reads white lines on the road or the like as images. Here, when only one of emitting light and receiving light is performed, one opening is formed in the center mask layer. It is also possible to provide a plurality of openings depending on the type of light. It should be noted that the information acquisition device may be in contact with or may not be in contact with the glass sheet.

When a camera is used as the information acquisition device, the visual field (view angle) of the camera is adjusted as follows. That is, the bracket 41 supports the camera such that the visual field of the camera (passage range of visible light or infrared rays) is arranged inside the inner edge of the opening in the center mask layer 22.

The shape of the bracket 41 is not limited to the above-described shape, and various aspects are possible. For example, when a camera is used as the information acquisition device, it is sufficient that only one opening is formed, and when a plurality of information acquisition devices are used, three or more openings may be formed. Moreover, the recessed portion 414 serves as a path of light that is formed between the opening in the mask layer 2 and the sensor 5. It is sufficient that this recessed portion is in communication with one of the openings in the bracket, and the recessed portion may be provided at any position in the bracket. Furthermore, the recessed portion is not necessarily formed to have an inclined shape, and there is no particular limitation on its shape as long as the recessed portion serves as a path of light.

### 7.2

The mask layer 2 has a three-layer configuration as mentioned above, but is not limited thereto. That is, although the silver layer 242 is provided in the above embodiment in order to block electromagnetic waves, a method of providing a single layer in which silver and ceramic layer are mixed may be used, and another material such as copper or nickel may be laminated as long as electromagnetic waves can be blocked. Although the silver layer 242 is sandwiched between the ceramic layers so as not to be seen from the outside, a member such as the above-described cover can be used instead of covering the silver layer 242 with the ceramic layers. An electromagnetic wave blocking layer is not necessarily provided, and it is sufficient that at least a layer for concealment from the outside is formed. Furthermore, the silver layer can also be applied in order to conceal the above-described region in which distortion occurs.

The mask layer 2 may have a color other than black, and there is no particular limitation as long as the mask layer 2 has a dark color such as brown, gray, and dark blue such that a field of vision from the outside of the vehicle is blocked and the vehicle interior side is concealed. A blocking film can be bonded instead of ceramic. A resin film having a dark color can be used as such a film, for example. Specifically, the blocking film can be made of polyvinyl chloride, polyurethane, polyethylene, polyethylene terephthalate, or the like, and is bonded to the glass sheet 1 using an adhesive. There is no particular limitation on the adhesive, and an acrylic adhesive or the like can be used. ABF Film, FTW9953J Film, Black Film, Black Out Film (e.g., FRA-3045J), or the like, manufactured by Sumitomo 3M Ltd. can be used as such a blocking film 70. It should be noted that the blocking film 70 may be bonded so as to be laid on the mask layer 22.

In the above embodiment, an example is described in which when the mask layer 2 is formed on the inner side of the glass sheet (inner surface of the inner glass sheet 12), the bracket 41 is fixed to the mask layer 2. However, when the mask layer 2 is formed on the inner surface of the outer glass sheet 11 or the outer surface of the inner glass sheet 12 in the laminated glass, for example, the bracket 41 is fixed at a position corresponding to the position at which the mask layer 2 is formed on the inner surface of the inner glass sheet 12.

The mask layer 2 can be constituted by ceramic and a film. For example, as shown in FIG. 15, the peripheral edge mask layer 21 can be made of ceramic, whereas the center mask layer 22 can be made of a film.

Although the main fixing material and the temporary fixing material for fixing the bracket 41 to the mask layer 2 also serve as the light shielding members in the above embodiment, light shielding members can be separately prepared. For example, the main fixing materials and the temporary fixing materials may be provided at positions at which light shielding is not required, and the light shielding members for blocking light may be separately prepared. However, the light shielding member, the main fixing material, and the temporary fixing material can be selected as appropriate from materials such as various adhesives and double-sided adhesive tapes as mentioned above, and the light shielding member, the main fixing material, and the temporary fixing material are not necessarily distinguished from one another depending on the types of materials.

### 7.3

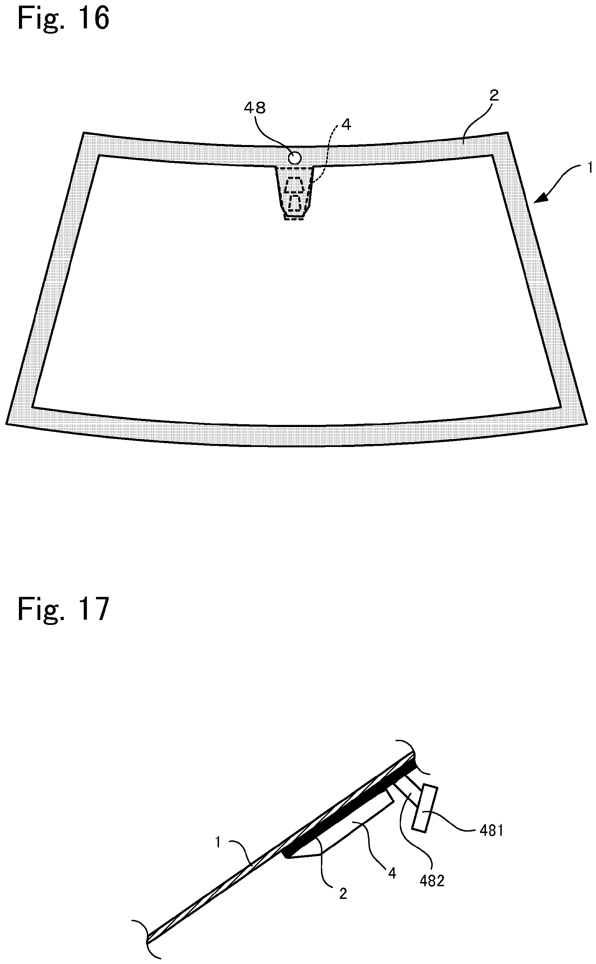

The above-described measurement unit 4 is attached to a position near the center of the upper portion of the windshield, but, in general, a rearview mirror is attached at this position. There is no particular limitation on a method of attaching a rearview mirror, and the rearview mirror can be attached at a position adjacent to the measurement unit 4 as shown in FIGS. 16 and 17. In this case, a rearview mirror 481 is fixed to the mask layer 2 via a rod-shaped base member 482. That is, one end portion of the rod-shaped base member 482 is fixed to the mask layer 2, and the rearview mirror 481 is fixed to the other end portion of the base member 482. At this time, the rearview mirror 481 is fixed in such a manner that an angle with respect to the base member 482 can be changed. It should be noted that the rearview mirror is a known rearview mirror and is constituted by a rectangular mirror supporting portion and a rectangular mirror that is fitted in one surface of the mirror supporting portion. The other end portion of the base member 482 is attached to the other surface of the mirror supporting portion.

Here, the base member 482 and the bracket 41 of the measurement unit 4 are fixed to the mask layer 2 using the same fixing material. That is, they are fixed using adhesives made of the same material or double-sided adhesive tapes made of the same material. Various adhesives can be used, and examples thereof include a urethane resin adhesive and an epoxy resin adhesive. It should be noted that the epoxy resin adhesive can provide adhesive strength in a small application amount compared with the urethane resin adhesive, and thus is advantageous. In particular, the angle of the rearview mirror 481 is often changed by hand, and therefore, it is necessary to firmly bond the base member 482 to the mask layer 2. From this viewpoint, it is preferable that the base member 482 is fixed to the mask layer 2 using the epoxy resin adhesive. The epoxy resin adhesive has higher viscosity than that of the urethane resin adhesive, and thus is less likely to flow after application, thus making it possible to prevent protrusion from the bracket 41 or the base member 482.

In particular, regarding the bracket 41 to which the sensor 5 is to be attached, when the adhesive protrudes toward the sensor 5 side, there is a risk that the adhesive will obstruct the path of light in the sensor 5, and this causes a problem in that information cannot be accurately recognized. On the contrary, when the bracket is fixed to the glass sheet using the epoxy resin adhesive, the applied adhesive is less likely to spread and is thus prevented from protruding from the bracket 41. As a result, information can be accurately recognized.

When the base member 482 and the bracket 41 are fixed to the mask layer 2 using an adhesive in this manner, an application apparatus is used to apply the adhesive to the one end portion of the base member and the bracket. At this time, if the same adhesive is used for the base member 482 and the bracket 41, the application of the adhesive can be performed continuously. Therefore, the operation can be performed efficiently. For example, the base member 482 and the bracket 41 are arranged in line on a pallet in a manufacturing line, and the application apparatus is used to continuously apply the adhesive to the base member 482 and the bracket 41. Thereafter, the base member 482 and the bracket 41 to which the adhesive has been applied are fixed to the corresponding positions of the glass sheet by hand or mechanically.

A double-sided adhesive tape can also be used instead of the adhesive. When the double-sided adhesive tape is used, no protrusion occurs, unlike with the adhesive. Therefore, the double-sided adhesive tape is suitable for fixing a portion having a small area to the mask layer. Moreover, time for drying is not required, unlike with the adhesive, and therefore, the operations can be performed in a short period of time.

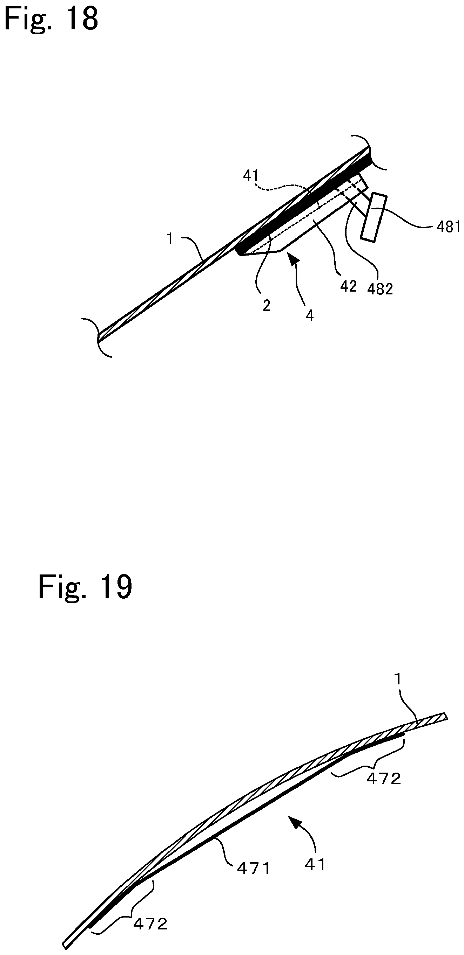

The base member 482 can be attached using a method other than the above-mentioned method, and as shown in FIG. 18, the base member 482 can also be fixed to the inside of the bracket 41, for example. That is, after the bracket 41 is fixed to the mask layer 2, the base member 482 is fixed to the mask layer 2 inside the frame of the bracket 41 (e.g., first opening). Next, after the bracket 41 is provided with the sensor 5 and predetermined wiring, the bracket 41 is covered with the cover 42. At this time, a through hole or a cutout through which the base member 482 is inserted is formed in the cover 42. This makes it possible to integrally form the base member 482 and the measurement unit 4, resulting in a simple shape.

### 7.4

The bracket is not limited to the bracket according to the above embodiment, and various aspects are possible. That is, various aspects of the bracket 41 are possible depending on the number of the sensors 5 and the shape of the sensor 5, and the size, the shape, the number of openings, the number of supporting portions, and the like can be changed as appropriate. Likewise, regarding the recessed portion 414, the position, the size, and the number thereof can be changed. There is no particular limitation on the positions of the adhesive and the double-sided adhesive tapes.

Furthermore, there is no particular limitation on the configuration, the positions, and the number of the supporting portions 413 as long as the supporting portions 413 can support the sensor 5, for example. In particular, it is preferable that the path of light emitted by the sensor 5 and the path of light to be received pass through positions that are spaced apart from the peripheral edges of the openings 231 and 232 in the mask layer 2 by at least 4 mm, respectively, as mentioned above, and it is more preferable that these paths pass through positions near the centers as shown in FIG. 12.

Since the glass sheet 1 included in the windshield is curved as mentioned above, the flat bracket 41 can be attached thereto as described below. That is, it is sufficient that, as shown in FIG. 19, the rigidity of portions of the fixed portions of the bracket 41 fixed to the glass sheet 1 (mask layer 2) is reduced, thus enabling at least portions of the fixed portions to be curved or bent. For example, a first region 471 having high rigidity and a second region 472 having low rigidity are formed in each fixed portion of the bracket 41. Since the second region 472 is likely to be curved or bent, the fixed portion of the bracket 41 can be reliably fixed to the curve of the glass sheet 1. Accordingly, the attachment accuracy of the bracket 41 is improved, and the bracket 41 can be firmly fixed to the mask layer 2. Moreover, the supporting portion 413 to which the sensor 5 is to be attached can be attached at a position corresponding to the first region 471. Accordingly, the sensor 5 is fixed to the first region 471 having high rigidity, and therefore, the sensor 5 is less likely to be shifted or moved together with the bracket 41, resulting in the improvement of the attachment accuracy of the sensor 5.

It should be noted that, for the sake of ease of description, FIG. 19 shows a state in which a large gap is formed between the first region 471 and the glass sheet 1, but in fact, such a gap is not formed or the gap is small even if the gap is formed. Therefore, it is sufficient that this gap is filled with the above-described adhesive 401 or double-sided adhesive tape 402, and thus the first region 471 is firmly fixed.

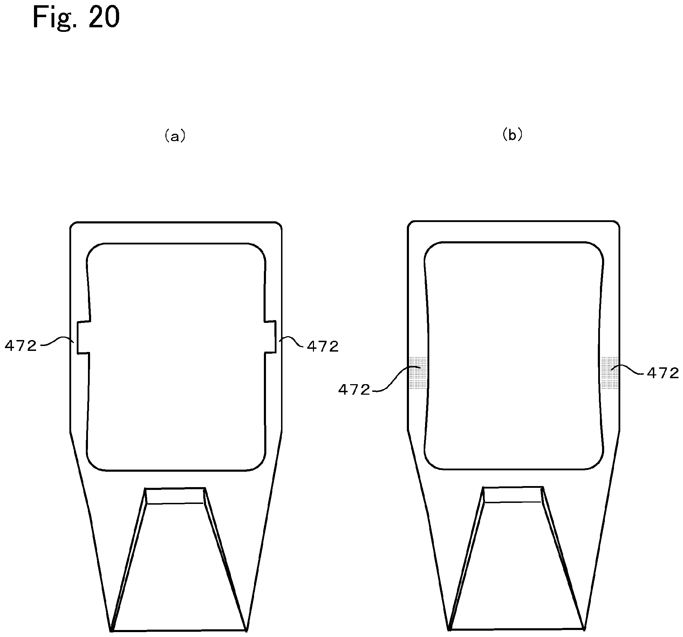

Various methods can be used to form the second region 472. That is, it is sufficient that the rigidity of the second region 472 is reduced to a level smaller than the rigidity of the first region 471, and the width can be reduced as shown in FIG. 20(a) or the thickness can be reduced. Alternatively, as shown in FIG. 20(b), the second region 472 can be made of a material having low rigidity such as a material that can be elastically deformed. Instead of reducing the rigidity, the second region 472 can be molded in advance in a curved shape so as to follow the curve of the glass sheet.

Various methods can be used to attach the bracket 41 to the mask layer 2 (or glass sheet). For example, it is sufficient that at least one of the first region 471 and the second region 472 is fixed to the mask layer 2. The fact that the second region 472 can be elastically deformed may be utilized to fix only the second region 472 such that the second region 472 follows the curve of the mask layer 2 or the first region 471 may be fixed.

### 7.5

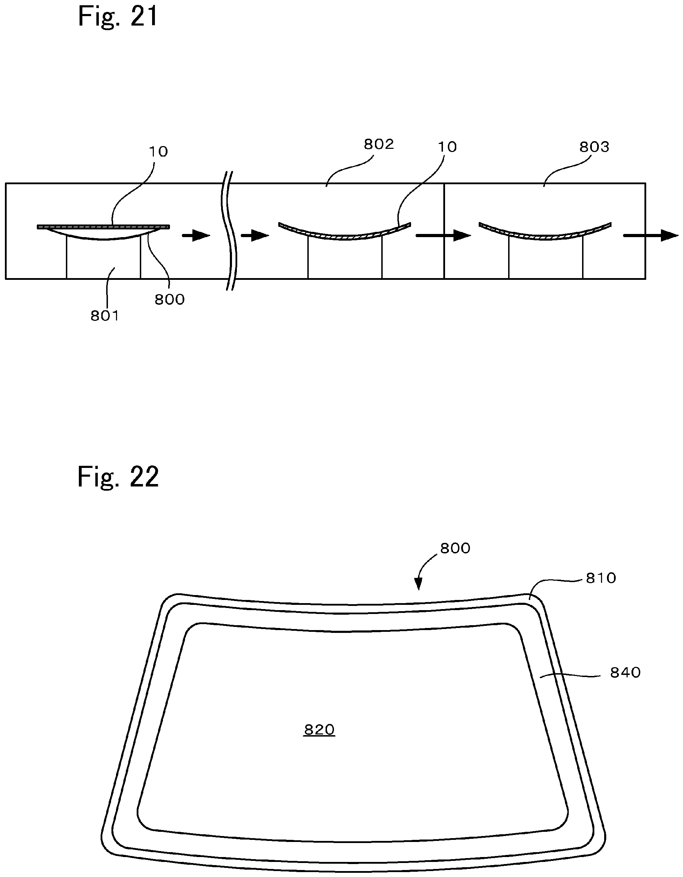

The glass sheet can be molded as follows. First, a laminated glass 10 having a flat shape that is obtained by stacking the inner glass sheet 12 and the outer glass sheet 11 is prepared. It should be noted that a method as mentioned above is used to laminate a mask layer on the glass sheets constituting this laminated glass. As shown in FIG. 21, this laminated glass 10 is placed on a ring-shaped (frame-shaped) mold 800. This mold 800 is arranged on a conveyance base 801, and the conveyance base 801 passes through the inside of the heating furnace 802 and the inside of an annealing furnace 803 in the state in which the laminated glass 10 is placed on the mold 800. In the heating furnace, heaters (not shown) are provided above and below the path of the conveyance base, and the laminated glass 10 is heated by these heaters.

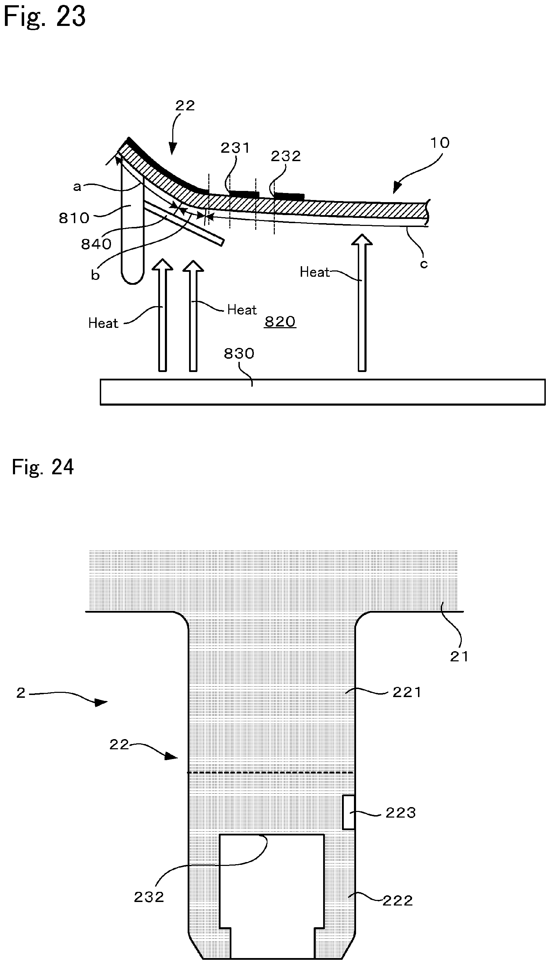

Here, the mold will be described more specifically with reference to FIGS. 22 and 23. FIG. 22 is a plan view of a mold, and FIG. 23 is a partial cross-sectional view of FIG. 22, showing a state in which a laminated glass is placed on the mold. As shown in this diagram, this mold 800 includes a frame-shaped mold main body 810 having a shape that is substantially the same as the external shape of the laminated glass 10. Since this mold main body 810 is formed in a frame shape, an inner space 820 that is open in the vertical direction is formed inside the mold main body 810. The peripheral edge portion of the laminated glass 10 having a flat shape is placed on the upper surface of this mold main body 810. Therefore, this laminated glass 10 is heated by a heater 830 arranged on the lower side through the inner space 820. Accordingly, the laminated glass 10 is softened through heating and curves downward under its own weight. It should be noted that an insulation board 840 for blocking heat may be arranged at the inner peripheral edge of the mold main body 810, and this makes it possible to adjust heat applied to the laminated glass. Specifically, in an example shown in FIG. 23, the insulation board 840 extends to a position at which a bent portion b is covered, thus suppressing heat reaching the bent portion b from the heater 830 and preventing the bent portion b from being excessively bent. It should be noted that heaters can be provided not only below but also above the mold 800.

More specific description will be given. As shown in FIG. 21, the laminated glass 10 passes through the heating furnace 802 in a state in which the laminated glass 10 is supported by such a mold. When the laminated glass 10 is heated to a temperature near the softening point in the heating furnace 802, a portion of the laminated glass 10 on the inner side with respect to the peripheral edge portion curves downward under its own weight, and is molded in a curved shape. Subsequently, the laminated glass 10 is conveyed from the heating furnace 802 to the annealing furnace 803, and subjected to annealing processing. Thereafter, the laminated glass 10 is conveyed from the annealing furnace 803 to the outside, and allowed to cool. After the inner glass sheet 12 and the outer glass sheet 11 are molded in a curved shape in this manner, the interlayer is sandwiched therebetween, and the above-described preliminary bonding and permanent bonding are performed. Accordingly, the laminated glass is completed.

Incidentally, since the peripheral edge portion of the above-mentioned laminated glass 10 is supported by the mold main body 810 of the mold, the central portion of the laminated glass 10 moves downward under its own weight. As a result, the laminated glass is molded in a cup shape in which the peripheral edge portion is inclined downward. More specifically, as shown in FIG. 23, approximately three regions, namely a concentric peripheral edge portion a, the bent portion b, and a central portion c, are formed in the stated order from the peripheral edge of the laminated glass 10 toward the center thereof. Regarding these three regions, the radius of curvature increases in the order of the bent portion b, the peripheral edge portion a, and the central portion c. Therefore, it is necessary to arrange a bent portion a of the above-described bracket 41 on the central portion c having the largest radius of curvature.

With this configuration, the bracket 41 is attached to a portion of the laminate glass 10 other than a portion in which particularly significant distortion occurs, and therefore, the attachment accuracy of the bracket 41 is improved, and the attachment strength can also be improved. It should be noted that not only a laminated glass but also a single glass sheet can be subjected to the above-mentioned molding.

### 7.6

Although the opening formed in the mask layer 2 is a closed opening whose entire periphery is surrounded by the mask layer 2 in the above embodiment, the opening does not necessarily have to be closed along the entire periphery in the present invention, and a portion thereof may be open. For example, the opening may also be an opening 232 whose lower side is open as shown in FIG. 24. An open side is not limited to the lower side, the periphery of an opening may be open at any position.

In this case, the bracket 41 is fixed not to the mask layer 2 but directly to the glass sheet 1 at the open portion of the opening 232. Therefore, the light shielding member such as a double-sided adhesive tape or an adhesive that fixes the bracket 41 to the glass sheet 1 can be seen from the outside. Accordingly, it is preferable that such a light shielding member for fixing the bracket 41 directly to the glass sheet 1 is a double-sided adhesive tape that is hard to see from the outside. The reason for this is that an adhesive is pressed between the bracket 41 and the glass sheet 1, resulting in a poor appearance.

### 7.7

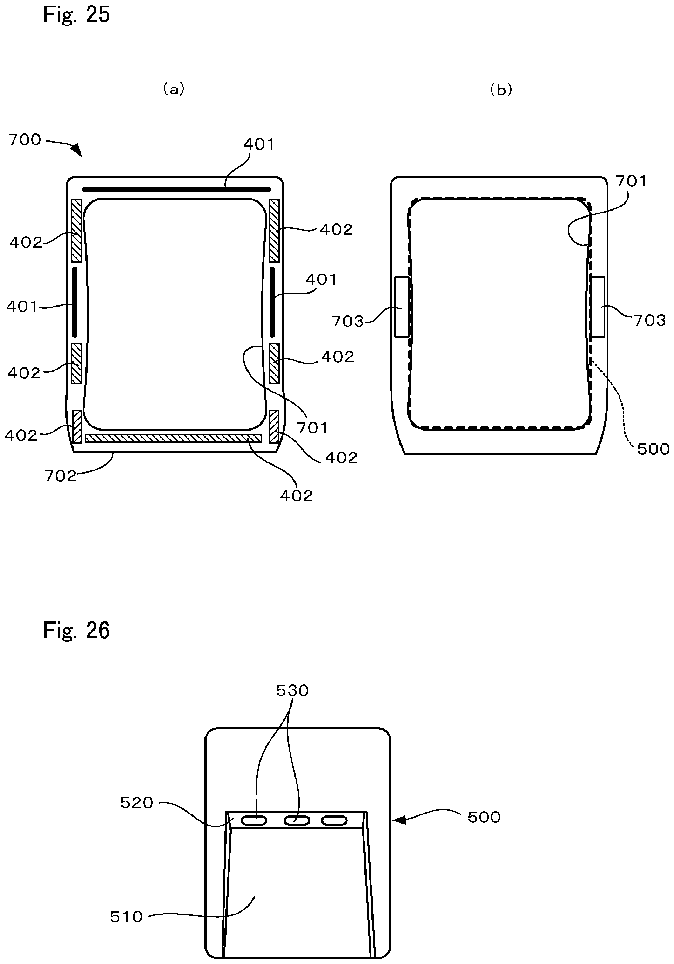

Although the recessed portion 414, which serves as a passage path of light, is integrally formed in the bracket 41 in the above embodiment, such a recessed portion can also be provided in a housing of the sensor (information acquisition device). Hereinafter, an example will be described with reference to FIGS. 25 and 26. FIGS. 25(a) and 25(b) are diagrams showing a bracket as viewed from a vehicle exterior side and a vehicle interior side, respectively, and FIG. 26 is a diagram of a sensor as viewed from a vehicle exterior side. In this example, as shown in FIG. 25, a recessed portion is not formed in a bracket 700. That is, the bracket 700 is formed in a rectangular frame shape in which an attachment opening 701 in which a sensor 500 is to be arranged is formed, and includes a rectangular main body portion 702 that surrounds the attachment opening 701, and supporting portions 703 that are arranged on both sides of this main body portion 702 and fix the sensor 500. A flat surface (fixed portion of the present invention) is formed in the main body portion 702. The adhesive 401 or the double-sided adhesive tapes 402 are attached to this flat surface, and thus the main body portion 702 is fixed to the mask layer 2 or the glass sheet 1. It should be noted that, in FIG. 25(a), the double-sided adhesive tape 402 extending in the lateral direction along the lower side of the attachment opening 701 corresponds to the lateral light shielding member of the present invention, and a pair of double-sided adhesive tapes 402 arranged on both sides thereof correspond to the side light shielding members of the present invention. However, the arrangement of the adhesive and the double-sided adhesive tapes in FIG. 25 is merely an example, and other arrangements may also be used. The lateral light shielding member can also be arranged close to the upper side of the attachment opening 701, and correspondingly, the side light shielding members can also be arranged close to the upper portion of the attachment opening 701. Such a lateral light shielding member or side light shielding members can be provided on the bracket as shown in FIG. 13 as well as on various types of brackets.

It should be noted that when this bracket 700 is fixed to the mask layer shown in FIG. 24 in which the opening whose lower portion is open is formed, the lower side of the main body portion 702 is arranged at the open portion of the opening. This portion can be seen from the outside, and therefore, it is preferable to provide the double-sided adhesive tape 402.

As shown in FIG. 26, the sensor 500 is supported by the bracket 700 via the supporting portions 703 and arranged so as to cover the attachment opening 701. In the housing of the sensor 500, a recessed portion 510 is formed on a surface that faces the glass sheet 1 through the attachment opening 701. This recessed portion 510 is inclined such that the depth is the largest at the upper end and decreases toward the lower end, and lenses 530 and the like of a camera, various elements such as a laser light receiving element and an emitting element, and the like are to be arranged on a wall surface 520 at the upper end, but there is no particular limitation on the types and the number thereof. With this sensor 500, images of the outside are taken using a camera, light is emitted by a laser, and light is received, through the recessed portion 510 and the glass sheet 1. It should be noted that this recessed portion 510 formed in the sensor 500 constitutes the path member of the present invention, and is integrated with the information acquisition device.

Although the light shielding members such as the adhesive and the double-sided adhesive tapes are provided on the main body portion 702 of the bracket 700 as described above, it is particularly preferable that the light shielding members are provided so as to surround the recessed portion 510 of the sensor 500 as shown in FIG. 26. This point is the same as those in FIG. 13 and the like in the above embodiment, and this makes it possible to obtain a light shielding effect during the driving of the sensor 500 in the same manner as described above. It should be noted that the shape of the bracket is not limited to the shape shown in FIG. 25, and it is sufficient that the attachment opening 701 through which at least the recessed portion 510 of the sensor 500 is exposed to the outside is formed, and the fixed portions that can be fixed to the mask layer 2 or the glass sheet 1 are provided.

### Reference Signs List

- 1: Glass sheet
- 2: Mask layer
- 22: Center mask layer
- 241: Upper opening (Opening)
- 242: Lower opening (Opening)
- 41, 700: Bracket (Attachment member)
- 5, 500: Sensor (Information acquisition device)
- 414, 510: Recessed portion

## Claims

1. A windshield on which an information acquisition device that emits and/or receives light to acquire information from an outside of a vehicle can be arranged, the windshield comprising:
a glass sheet in which at least a portion is curved and on which a mask layer that blocks a field of vision from the outside of the vehicle is laminated, at least one opening being formed in the mask layer;
an attachment member in which at least a portion is fixed at a position corresponding to the mask layer on the glass sheet and to which the information acquisition device can be attached; and
a path member having a recessed portion for forming a path through which the information acquisition device emits and/or receives light between the path member and the glass sheet when the attachment member is fixed to the mask layer,
wherein the information acquisition device is arranged on a surface on a vehicle interior side of the glass sheet so as to be capable of acquiring information through the opening,
the attachment member includes a fixed portion in which at least a portion is fixed at a position corresponding to the mask layer, and
in the attachment member, at least a portion of the fixed portion that is arranged around the recessed portion of the path member is fixed to the mask layer via a light shielding member.

2. The windshield according to claim 1, wherein the path member is integrally fixed to the attachment member.

3. The windshield according to claim 1, wherein the path member is provided in the information acquisition device.

4. The windshield according to claim 2,
wherein a first opening through which light that travels from the outside of the glass sheet toward the information acquisition device and that is received by the information acquisition device passes, and a second opening through which light that is emitted by the information acquisition device toward the glass sheet passes are formed in the attachment member,
the second opening is in communication with the recessed portion, and
a portion of the fixed portion is configured to separate the first opening and the second opening, and at least a portion of the fixed portion is fixed to the mask layer via the light shielding member.

5. The windshield according to claim 4,
wherein the attachment member is formed in a rectangular frame shape having a first side, a second side, a third side, and a fourth side in a plan view and includes a pair of supporting portions that support the information acquisition device,
the first side is arranged on an upper side of the glass sheet and the third side is arranged on a lower side of the glass sheet,
the supporting portions are respectively arranged on the second side and the fourth side,
the first opening is arranged close to the first side,
the second opening is arranged close to the third side, and
the recessed portion is arranged along the third side and is in communication with the second opening.

6. The windshield according to claim 5, wherein at least a portion of the fixed portion arranged on the first side is fixed to the mask layer via the light shielding member.

7. The windshield according to any one of claims 1 to 6,
wherein the fixed portion arranged around the recessed portion is provided with:
a lateral light shielding member that extends from one end portion to the other end portion in a lateral direction of the recessed portion; and
a pair of side light shielding members that are arranged on both sides of the lateral light shielding member.

8. The windshield according to any one of claims 1 to 7, wherein the light shielding member is constituted by an adhesive or a double-sided adhesive tape.

9. The windshield according to claim 8, wherein the light shielding member is an epoxy resin-based adhesive.

10. The windshield according to any one of claims 1 to 7,
wherein the mask layer is configured such that the opening is not closed at a portion of a peripheral edge thereof and is open to an outside, and
the fixed portion of the attachment member is fixed to the glass sheet at the open portion using the light shielding member constituted by a double-sided adhesive tape.

11. The windshield according to claim 8 or 10, wherein the light shielding member is constituted by a double-sided adhesive tape, and the double-sided adhesive tape has a thickness of 0.2 to 0.8 mm.

12. The windshield according to any one of claims 1 to 11, wherein the information acquisition device includes a camera, and the camera is configured to acquire information through the opening.
